# EUROPÄISCHE PATENTSCHRIFT

(11) **EP 3 043 893 B1**
(45) Veröffentlichungstag und Bekanntmachung des Hinweises auf die Patenterteilung: **22.11.2017**
(21) Anmeldenummer: 14766150.8
(22) Anmeldetag: 11.09.2014
(51) Int. Cl.: B01D 63/02, B01D 63/04, B01D 65/08

(54) **MEMBRANFILTER UND VERFAHREN ZUM FILTERN**
MEMBRANE FILTER AND FILTERING METHOD
FILTRE À MEMBRANE ET PROCÉDÉ DE FILTRATION

(30) Priorität: 11.09.2013 DE 102013218188
(43) Veröffentlichungstag der Anmeldung: 20.07.2016
(73) Patentinhaber: Membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer, Dirk
(86) Internationale Anmeldenummer: PCT/EP2014/069342
(87) Internationale Veröffentlichungsnummer: WO 2015/036459

(56) Entgegenhaltungen:
- EP-A1- 0 655 418
- EP-A1- 0 947 237
- EP-A2- 2 529 827
- WO-A1-2006/047814
- WO-A1-2011/136888
- WO-A1-2014/011204
- DE-A1-102011 110 591
- DE-C1- 10 045 227
- US-A- 5 910 250

## Beschreibung

Die Erfindung betrifft einen Membranfilter zum Filtern einer zu filtrierenden Flüssigkeit mit einem nach unten offenen, von einem Gas und der Flüssigkeit durchströmbaren Fußelement, das einen rohrförmigen Mantel und genau einen darin befindlichen Membranträger aufweist, wobei der Membranträger mit dem Mantel über mindestens eine Ankerstelle verbunden ist, oben in dem Membranträger befestigten Hohlfasermembranen mit jeweils einem Lumen, in das ein flüssiges Permeat aus der zu filtrierenden Flüssigkeit filtrierbar ist, einem im Umfang geschlossenen Rohr, das an den Mantel oben anschließend die Hohlfasermembranen umgibt, einem Gaseinlass zum Einlassen des Gases in das Fußelement, mindestens einem Permeatsammelraum, der mit den Lumen der Hohlfasermembranen verbunden ist zum Sammeln des Permeats aus den Hohlfasermembranen, mindestens einem Permeatauslass zum Ablassen des Permeats aus dem mindestens einen Permeatsammelraum und mindestens einem nach unten offenen Strömungsraum zwischen dem Mantel und dem Membranträger zum Durchströmen der Flüssigkeit, der oben einen Auslass aufweist zum Auslassen der Flüssigkeit in das Rohr, wobei der mindestens eine Strömungsraum in jedem horizontalen Schnitt durch den Membranträger sowohl an den Mantel als auch an den Membranträger grenzt und als Ringspalt den Membranträger umgibt, der nur durch die mindestens eine Ankerstelle unterbrochen wird, wobei eine Höhe des Strömungsraums durch einen Überschneidungsbereich einer Höhe des Membranträgers und einer Höhe des Mantels definiert ist, und wobei der Membranträger das Fußelement bis auf den mindestens einen Strömungsraum für die Durchströmung der Flüssigkeit von unten nach oben vollständig verschließt.

Die Erfindung betrifft weiterhin ein Verfahren zum Filtern einer zu filtrierenden Flüssigkeit in einem solchen Membranfilter, wobei die Flüssigkeit in das Fußelement einströmt, den mindestens einen Strömungsraum durchströmt und dabei den Membranträger umströmt, ein Gas durch den Gaseinlass in das Fußelement einströmt, die Flüssigkeit nur durch den Auslass oben am Fußelement ausströmt und nur durch diesen in das Rohr einströmt, das Gas oben am Fußelement ausströmt, in das Rohr einströmt und in dem Rohr aufsteigt und dadurch eine Aufwärtsbewegung der Flüssigkeit in dem Membranfilter generiert, die aufsteigende Flüssigkeit und das Gas die Hohlfasermembranen außen spülen, zwischen einer Außenseite der Hohlfasermembranen und Lumen der Hohlfasermembranen eine Druckdifferenz anliegt, aufgrund derer ein flüssiges Permeat aus der Flüssigkeit filtriert wird und in die Lumen der Hohlfasermembranen strömt und das Permeat aus den Lumen gesammelt wird und aus dem Membranfilter ausströmt.

Ein Membranfilter mit den eingangs beschriebenen Merkmalen ist aus WO-02/22244-A1 bekannt, an der auch einer der Erfinder beteiligt war.

Der bekannte Membranfilter ist konzipiert für die Filtration von feststoffreichen Abwässern, wie sie beispielsweise in biologischen Kläranlagen in Membranbioreaktoren (MBR) anzutreffen sind. Dabei kann der Membranfilter entweder in die Becken der Kläranlage getaucht werden oder mit Zu- und Abfuhrrohrleitungen versehen, trocken aufgestellt werden. Die Triebkraft für die Filtration wird in den meisten Fällen über einen permeatseitig angelegten Unterdruck realisiert, kann aber bei der trocken aufgestellten Variante auch über einen geringen feedseitigen (rohwasserseitigen) Überdruck realisiert werden.

Die Hohlfasermembranen haben einen Durchmesser von weniger als 5 mm, meist 0,5 bis 3 mm und weisen eine Durchlässigkeit von Mikrofiltrationsmembranen oder Ultrafiltrationsmembranen auf. Die Verwendung von Hohlfasermembranen für die Umkehrosmose oder Nanofiltration ist auch möglich.

Um eine Verblockung des Membranfilters durch abfiltrierte Stoffe zu vermeiden, wird der Membranfilter kontinuierlich oder in periodischen Intervallen gespült. Üblicherweise verwendete Methoden zur physikalischen Spülung der Membranfilter arbeiten mit einer permeatseitigen Rückspülung der Hohlfasermembranen mit Flüssigkeit oder Gas kombiniert mit einer Gasblasenspülung auf der Außenseite der Hohlfasermembranen. Bei letzterer werden Gasblasen von unten in den Membranfilter eingetragen, die dann entlang der Hohlfasermembranen aufsteigen und diese in der zu filtrierenden Flüssigkeit bewegen. Mit dem Aufsteigen der Gasblasen wird stets auch eine Aufwärtsströmung der Flüssigkeit erzeugt. Die Scherkraft der Zweiphasenströmung aus Gas und Flüssigkeit hat eine hohe Turbulenz, wodurch Beläge von den Membranen abgelöst und ausgespült werden. Bei Membranbioreaktoren wird als Gas üblicherweise Luft verwendet.

Der sogenannte Mammutpumpeneffekt, d.h. die durch aufsteigende Gasblasen induzierte Aufwärtsströmung der Flüssigkeit durch den Membranfilter hat eine besonders hohe Reinigungswirkung auf die Hohlfasermembranen, wenn diese von einem im Umfang geschlossenen Rohr umgeben werden, weil dadurch die Gasblasen im Membranfilter, d.h. in unmittelbarer Nähe der Hohlfasermembranen gehalten werden. Der positive Effekt des Rohres wird im Hintergrund der Erfindung unter anderem in JP-2003-024937 und US-2006/0273007 A1 beschrieben.

Bei einer der Ausführungsformen des bekannten Membranfilters sind Hohlfasermembranen des in getauchter oder trocken aufgestellter Version einsetzbaren Membranfilters in genau einem Membranträger befestigt, der über 6 Ankerstellen mit einem rohrförmigen Mantel eines Fußelementes verbunden ist. Der Membranfilter weist einen Permeatsammelraum auf, an den die Hohlfasermembranen angeschlossen sind. Die Hohlfasermembranen sind oben einzeln verschlossen.

Zudem weist das Fußelement in diesem Membranfilter einen Gaseinlass auf, der über einen Gaskanal an ein Mundstück angeschlossen ist, das zwischen die Hohlfasermembranen ragt. Über das Mundstück wird das Gas oberhalb des Membranträgers zwischen die Hohlfasermembranen in die zu filtrierende Flüssigkeit eingetragen. Durch den Mammutpumpeneffekt des eingetragenen Gases wird die Flüssigkeit von unten durch 6 Bohrungen zwischen den Ankerstellen des Fußelementes angesaugt. Die Bohrungen bilden Strömungsräume im Fußelement, die sich zwischen dem Membranträger und dem Mantel befinden. Die Flüssigkeit durchströmt den Modulfuß in diesen Strömungsräumen und steigt dann nach Vermischung mit dem oben am Modulfuß eingetragenen Gas gemeinsam mit diesem in dem Membranfilter auf, bevor das Gas und die Flüssigkeit oben aus dem Membranfilter ausströmen. Charakteristisch ist, dass die Flüssigkeit nur durch die 6 Bohrungen, d.h. Strömungsräume, die zwischen Mantel und Membranträger liegen das Fußelement durchströmt. Weitere Durchlässe für ein Durchströmen der Flüssigkeit gibt es im Fußelement nicht. D.h. der Membranträger verschließt das Fußelement bis auf die Strömungsräume.

Weiter charakteristisch für diesen Membranfilter ist, dass das Gas und die Flüssigkeit getrennt an die Hohlfasermembranen herangeführt werden: die Flüssigkeit strömt durch die Strömungsräume zwischen Mantel und Membranträger von unterhalb des Membranträgers und das Gas zentral aus einem Mundstück von oberhalb des Membranträgers zu den Hohlfasermembranen.

Im Fußelement sind besonders die parallel geschalteten Strömungsräume als kleine Bohrungen zur Durchströmung der Flüssigkeit anfällig für Verblockungen. Kommt es in einer der parallel geschalteten Bohrungen zu einer Ablagerung oder Querschnittsverengung, beispielsweise durch angeschwemmtes Laub oder faserige Verbindungen, so reduziert sich in dieser Bohrung die Durchströmgeschwindigkeit und das Risiko einer weiteren Verblockung steigt an. Derartige Systeme der Durchströmung von parallel geschalteten kleinen Bohrungen werden daher in der Verfahrenstechnik als instabil bezeichnet: eine beginnende Verblockung in einem Strömungskanal beschleunigt sich selbst und führt zu einer völligen Verblockung des entsprechenden Strömungskanals, sofern der Strömung genügend alternative Strömungswege offen stehen. Beginnt z.B. bei dem bekannten Membranfilter mit 6 parallelen Bohrungen eine der Bohrungen zu verblocken, so können die verbleibenden 5 Bohrungen die reduzierte Durchströmung kompensieren. Bei einer völligen Verblockung der Bohrung müssten die anderen Bohrungen ihre Durchströmung um lediglich 20% steigern. Die Gefahr der Verblockung parallelgeschalteter innendurchströmter Kanäle nimmt mit geringer werdender Anzahl der Kanäle und größer werdenden Kanalquerschnitten kontinuierlich ab.

Neben dem Problem der Verblockung der Bohrungen im Fußelement ergibt sich ein weiteres Problem bei dem bekannten Membranfilter unmittelbar oberhalb der Ankerstellen. Im Strömungsschatten der Ankerstellen besteht die Gefahr der Ablagerung von Partikeln, die zu einer partiellen Verstopfung des Filters führen können. Das Problem der Ablagerung von Partikeln in weniger turbulenten Strömungsbereichen ist naturgemäß bei Membranbioreaktoren besonders kritisch, da es sich hier bei der zu filtrierenden Flüssigkeit um einen Schlamm handelt, in dem viele Partikel, Haare, faserige Verbindung und sonstige Störstoffe enthalten sind, die zu Ablagerungen und Verblockungen neigen.

Das dritte Problem des bekannten Membranfilters ist die unzureichende Gasverteilung beim Scale-Up des Systems mit einem zentralen Mundstück oben am Membranträger. Die zentral in der Mitte aufsteigenden Gasblasen benötigen eine Einlaufstrecke, bevor sie so weit in ihrer Größe angewachsen sind bzw. sich horizontal ausgebreitet haben, dass sie den gesamten Bündeldurchmesser erreichen. Mit steigendem Durchmesser wird diese Eilaufstrecke länger und es zeigt sich, dass der maximale Durchmesser des Membranbündels, der gleichmäßig begast werden kann, auf knapp 10 cm begrenzt ist. Größere Durchmesser führen dazu, dass der Außenbereich des Bündels nahe der unteren Einspannstelle nur unzureichend von der Energie der eingetragenen Luft gereinigt wird und dadurch zu Verblockungen neigt.

Im Hintergrund der Erfindung beschreibt auch DE 19811945 A1 einen Membranfilter, der ein Fußelement aufweist mit einem Membranträger, in dem Hohlfasermembranen befestigt sind. Auch an dieser Anmeldung war einer der Erfinder beteiligt. Hier werden der Membranfilter und das Fußelement von einem gemeinsamen Rohr umgeben. Es gibt jedoch keinen Mantel des Fußelementes mit dem der Membranträger verbunden ist. Der Membranfilter weist zwischen dem Membranträger und dem Rohr einen Strömungsraum auf, durch den die zu filtrierende Flüssigkeit strömt. Neben diesem Strömungsraum weist der Membranfilter weitere Durchgangsöffnungen für die zu filtrierende Flüssigkeit und das Gas im Inneren auf, die jedoch nicht sowohl an den Membranträger als auch an das Rohr grenzen. Problematisch erweisen sich gerade diese parallel durchströmten kleinen Durchgangsöffnungen, da sie sehr verblockungsanfällig sind. Auch WO 2011/136888A1 beschreibt einen Membranfilter, der ein Fußelement aufweist mit einem Membranträger, in dem Hohlfasermembranen befestigt sind.

### Aufgabe

Der Erfindung liegt die Aufgabe zugrunde, einen Membranfilter anzugeben, bei dem die Verblockungsneigung reduziert ist.

### Lösung

Ausgehend von dem bekannten Membranfilter wird nach der Erfindung vorgeschlagen, dass das Fußelement in Folge vom Gaseinlass durch den mindestens einen Strömungsraum bis zum Auslass durchströmbar ist. Dadurch wird das Gas nicht wie in dem bekannten Membranfilter über eine separate Gasleitung zentral in die Mitte der im Membranträger befestigten Hohlfasermembranen eingeleitet sondern die Gaszuführung erfolgt gemeinsam mit der Flüssigkeit durch den mindestens einen Strömungsraum in den Außenbereich der Hohlfasermembranen. Dadurch ergeben sich mehrere Vorteile für eine Reduzierung der Verblockungsneigung des Membranfilters. Zum einen wird die Scherkraft der Zweiphasenströmung aus Gas und Flüssigkeit auch für die Spülung des Membranträgers genutzt und zum anderen wird direkt im unteren Bereich der Membranen das Gas auch in den Randbereich des Membranbündels eingetragen, sodass auch hier die Verblockungsneigung reduziert wird.

Bei der Ausgestaltung des Membranfilters ist es vorteilhaft, dass das Rohr die Hohlfasermembranen zu mindestens 50% ihrer freien Länge, d.h. ihrer in der Flüssigkeit befindlichen Länge umgibt. Dadurch wird sichergestellt, dass der Mammutpumpeneffekt in dem Rohr eine ausreichend starke Strömung im Strömungsraum generiert, um auch den darin befindlichen Membranträger zu spülen.

Ein Membranbündel mit dichter Packung der Hohlfasermembranen in einem Kreisquerschnitt ist im Durchmesser begrenzt. Die Praxis des Betriebs von Hohlfasermodulen in Membranbioreaktoren zeigt, dass die Scherkraft der Zweiphasenströmung aus Flüssigkeit und Gas je nach Betriebsbedingungen maximal etwa 2,0 - 2,5 cm in ein Bündel von Hohlfasermembranen hinein wirkt. Daher ist der Außendurchmesser des Membranbündels mit kreisrundem Querschnitt auf etwa 4 - 5 cm beschränkt.

Der mindestens eine Strömungsraum weist in den erfindungsgemäßen Membranträger hineinragende Ausbuchtungen auf. Dadurch kann die Breite der mit Membranen dicht gepackten Querschnittsfläche auf ein Maß reduziert werden, das von außen über die Scherkraft der Zweiphasenströmung aus Gas und Flüssigkeit gespült werden kann. Die einfachste Form der Ausbuchtungen sind Ausbuchtungen in rein radialer Richtung. Vor dem Hintergrund der oben beschriebenen Beschränkung kann der Durchmesser des Membranträgers durch die Ausbuchtungen auf etwa 8 - 10 cm gesteigert werden.

Bei größeren Durchmessern sind auch andere Formen der Ausbuchtungen und damit Geometrien des Membranträgers denkbar, wie z.B. eine Kleeblattform des Membranträgers oder ein Membranträger, in dem mehrere kreisrunde Membranbündel angeordnet sind.

In einer vorteilhaften Ausgestaltung des Membranfilters mit größerem Durchmesser weist der Membranträger Finger auf, die durch die Ausbuchtungen ausgebildet werden und die über einen Anker des Membranträgers verbunden sind. Diese sind vorzugsweise parallel angeordnet. Die Bezeichnung Finger bezieht sich dabei auf das Merkmal, dass in einem horizontalen Schnitt durch den Membranträger die Finger eine einheitliche Breite aufweisen. Das heißt jedoch nicht, dass sie auch in vertikaler Ausrichtung eine einheitliche Höhe aufweisen, bzw. dass diese Höhe irgendwie mit der Breite korreliert. Somit bieten die Finger die Möglichkeit, die Breite des mit Hohlfasermembranen bestückten Bereiches einheitlich zu gestalten und frei zu wählen. Es erweist sich als vorteilhaft, die Breite des mit Membranen bestückten Bereiches der Finger zwischen 2 und 5 cm zu gestalten, da dann eine optimale Spülung des mit Hohlfasermembranen bestückten Bereiches der Finger auch nahe der Einspannstelle gewährleistet ist.

Es ist vorteilhaft, die Anzahl der Ankerstellen möglichst gering zu halten, da dadurch die Anzahl der Strömungskanäle für die zu filtrierende Flüssigkeit geringer und gleichzeitig deren Strömungsquerschnitte größer werden. Dadurch wird das Problem der Verblockung der parallel durchströmten Strömungskanäle deutlich reduziert.

Bei der Ausgestaltung des Membranfilters mit Fingern ist es weiterhin vorteilhaft, dass der Membranträger über maximal zwei Ankerstellen mit dem Mantel verbunden ist, die in Verlängerung des Ankers stehen. Dies hat vor allem Vorteile für die Fertigung des Fußelementes als Spritzgussteil.

Bei einer vorteilhaften Ausführung eines solchen erfindungsgemäßen Membranfilters ist der Membranträger mit dem Mantel nur über eine Ankerstelle verbunden. In diesem Fall strömt die gesamte den Membranfilter durchströmende Menge der Flüssigkeit und des Gases gemeinsam durch diesen einen Strömungsraum und anschließend durch dessen Auslass in das sich an den Mantel des Fußelementes oben anschließende Rohr. Durch den Mammutpumpeneffekt, den insbesondere das in dem Rohr aufsteigende Gas erzeugt, kann ein derartiges System als quasi zwangsdurchströmt bezeichnet werden. D.h. solange Gas in dem Membranfilter aufsteigt, wird auch Flüssigkeit von unten durch das Fußelement angesaugt. D.h. solange etwas durch den Membranfilter strömt, ist der eine Strömungskanal nicht völlig verblockt und hat daher selbst bei einer teilweisen Verblockung immer noch das Potential, durch eine höhere Scherkraft der Strömung freigespült zu werden. Eine höhere Scherkraft kann beispielsweise durch eine Steigerung der Gasmenge und damit der Turbulenz der Strömung erreicht werden. Der Vorteil der Möglichkeit des Freispülens von teilweise verblockten Strömungskanälen ist bei mehreren parallel geschalteten, innendurchströmten Kanälen nicht der Fall. Ist bei solchen Systemen ein Kanal teilweise verblockt, so hat er die Tendenz aufgrund der dann geringeren Durchströmgeschwindigkeit völlig zu verblocken. Um einen völlig verblockten Strömungskanal wieder zu reinigen, reicht eine mechanische Spülung des Membranfilters über die Zweiphasenströmung aus Gas und Flüssigkeit allein in der Regel nicht aus. In solchen Fällen ist häufig eine chemische Intensivreinigung des Membranfilters bis hin zu einer manuellen mechanischen Reinigung erforderlich. Die Möglichkeit des Freispülens von teilweise verblockten Strömungskanälen steigt mit geringer werdender Anzahl der parallelen Strömungskanäle. Daher ist die Wahl eines einzigen Strömungskanal vorteilhaft. Dem sind jedoch auch bei dem erfindungsgemäßen Membranfilter Grenzen gesetzt.

Die Realisierung nur einer Ankerstelle bei einem erfindungsgemäßen Membranfilter ist nur bis zu einem Durchmesser von etwa 15-18 cm des Fußelementes sinnvoll. Bei größeren Membranträgern ist es aus statischen Gesichtspunkten günstiger, wenn der Membranfilter mindestens zwei gegenüberliegende Ankerstellen aufweist. In dieser Ausgestaltung des erfindungsgemäßen Membranfilters ist es vorteilhaft, über eine Ankerstelle den Permeatauslass und über die andere den Gaseinlass anzuschließen.

Aus fertigungstechnischen Gründen ist es bei der Ausgestaltung des erfindungsgemäßen Membranfilters mit Fingern im Membranträger günstig, die Breite des mit Hohlfasermembranen bestückten Bereiches der Finger zu beiden Seiten des Ankers und auch im Bereich des Ankers einheitlich zu gestalten und dabei den kleinen Bereich zwischen den Fingern oberhalb des Ankers nicht mit Membranen zu bestücken.

Um zu vermeiden, dass sich im Strömungsschatten des Ankers zwischen den Fingern Feststoffpartikel ablagern, ist es vorteilhaft, den Querschnitt des Ankers zwischen den Fingern in vertikaler Richtung nicht bis zum Auslass auszubilden, sondern schon vorher sich verjüngend auslaufen zu lassen. Das Gleiche gilt auch für die Ausgestaltung der Ankerstellen zur Verbindung des Membranträgers mit dem Mantel.

In diesem Fall ist der Membranträger in jedem der horizontalen Schnitte oberhalb der mindestens einen Ankerstelle vollständig vom Mantel getrennt. Reicht der Mantel gleichzeitig oben bis mindestens zum oberen Ende des Membranträgers, so ist der Membranträger in diesem horizontalen Schnitt vollständig im Auslass eingebettet. Dabei muss der Membranträger nicht zwangsläufig oben am Fußelement zusammenhängend sein, denn im Beispiel des Membranträgers mit Fingern und nicht bis zum Auslass ausgebildetem Anker zwischen den Fingern, weist der Querschnitt im Auslass mehrere voneinander getrennte Finger auf, die jedoch alle Teil des einen Membranträgers sind.

Es ist im Rahmen der Erfindung vorteilhaft, auch die Breite der Ausbuchtung des Strömungsraums zwischen den Fingern einheitlich zu gestalten. Diese liegt vorteilhafter Weise im Bereich zwischen 3 und 8 mm, je nach Betriebsbedingungen und Feststoffgehalt der zu filtrierenden Flüssigkeit. Bei geringerem Feststoffgehalt und kleineren Feststoffpartikeln können auch kleinere Abmessungen aus Gründen der Steigerung der Packungsdichte sinnvoll sein - unter der Bedingung, dass immer noch genügend zu filtrierende Flüssigkeit durch den Strömungsraum fließen kann.

Um die Durchströmung des Fußelementes zu vergleichmäßigen, ist es vorteilhaft, dass der mindestens eine Strömungsraum in mindestens einem der horizontalen Schnitte mindestens einen Strömungskanal ausbildet, der über mehr als 80 % seiner Länge eine einheitliche Breite aufweist. Da an den Stellen der Ausbuchtungen aus strömungstechnischen Gesichtspunkten Abrundungen der Außenkanten des Membranträgers vorteilhaft sind, weicht die Breite des Strömungskanals an diesen Stellen geringfügig von der einheitlichen Breite ab.

Bei der erfindungsgemäßen Ausgestaltung des Membranfilters ist es vorteilhaft, dass der Membranträger in den horizontalen Schnitten einen sich nach unten verringernden Querschnitt aufweist. Dadurch entstehen schräge Anströmkanten am Membranträger, an denen in der zu filtrierenden Flüssigkeit befindliche Störstoffe, wie z. B. Haare oder faserige Verbindungen, Laub oder gröbere Partikel abgleiten können. Die Schrägen sind dabei derart gestaltet, dass die erwähnten Störstoffe am Membranträger nach außen in den Strömungsraum abgeleitet werden. Dies lässt sich anschaulich am Beispiel der Finger verdeutlichen: wenn sich bei der Anströmung eines Fingers am Membranträger von unten faserige Verbindungen auf die Anströmkante des Fingers legen, so werden diese aufgrund der schrägen Gestaltung der Anströmkante der Finger bis zum Ende des Fingers gleiten und dann vom Finger in den Strömungskanal abgleiten und aus dem Modul ausgespült werden. Über die Gestaltung des Membranträgers mit einer sich nach unten verringernden, horizontalen Querschnittsfläche, werden horizontale, in der Strömung stehende Anströmkanten, an denen sich Störstoffe leicht festsetzten können, weitgehend vermieden.

In einer vorteilhaften Ausgestaltung des Membranfilters weist das Fußelement den Gaseinlass auf zum Einlassen des Gases in das Fußelement. Der Gaseinlass befindet sich dabei unterhalb des Membranträgers. Vorteilhaft ist es wenn der Gaseinlass unmittelbar unterhalb des Membranträgers angeordnet ist, weil dadurch die Einblastiefe des Gases minimiert wird, was sich günstig auf den Energiebedarf der Begasung auswirkt.

Im Hintergrund der Erfindung bekannte Membranfilter weisen beispielsweise für die Erzeugung eines Gas-Flüssigkeitsgemisches eine vertikal ausgerichtete Mischkammer auf. Diese hat jedoch den Nachteil, dass sie die Einblastiefe des Gases und damit den Energiebedarf erhöht. Bei 2 m Wassertiefe bedeuten 20 cm zusätzliche Einblastiefe aufgrund einer Mischkammer bereits einen 10 % höheren Energiebedarf. In WO 2008/144826 A1 wird ein derartiges System mit vertikal ausgedehnter Mischkammer zur Vermischung von Gas und Flüssigkeit beschrieben.

Alternativ lässt der Gaseinlass von unten Gas in das Fußelement ein ohne selber Teil des Fußelementes zu sein.

Für den Einsatz des erfindungsgemäßen Membranfilters zur Abwasseraufbereitung in Membranbioreaktoren ist es vorteilhaft, dass die Hohlfasermembranen oben einzeln verschlossen sind und mit ihrem oberen Ende frei in der Strömung der zu filtrierenden Flüssigkeit schweben. Dadurch können Störstoffe, wie insbesondere Haare und faserige Verbindungen selbst dann aus dem Membranfilter ausgespült werden, wenn sie sich bei der Durchströmung des Filters um die Hohlfasermembranen gewickelt haben.

Bei dieser Ausgestaltung des erfindungsgemäßen Membranfilters mit nur unten im Membranträger des Fußelementes befestigten Hohlfasermembranen, weist das Fußelement den Permeatsammelraum auf, der mit den Lumen der Hohlfasermembranen verbunden ist, sowie den Permeatauslass zum Ausströmen des Permeates aus dem Membranfilter. In diesem Fall ist es zudem vorteilhaft, dass sich das Rohr mit geschlossenem Umfang mindestens bis zum oberen Ende der Hohlfasermembranen erstreckt. Bevorzugt weist ein erfindungsgemäßer Membranfilter ein Rohr auf, dass das obere Ende der Hohlfasermembranen überragt. Dadurch wird sichergestellt, dass im oberen Bereich der Hohlfasermembranen vertikale Strömungskomponenten überwiegen, wodurch insbesondere ein Abstreifen und Ausspülen von Störstoffen aus dem Filter begünstigt wird.

Bei weniger biegesteifen Hohlfasermembranen ist es vorteilhaft, wenn der erfindungsgemäße Membranfilter zusätzlich zum Fußelement ein Kopfelement aufweist, in dem die Hohlfasermembranen oben befestigt sind. Bei einem solchen erfindungsgemäßen Membranfilter kann zudem das Kopfelement einen mit dem Lumen der Hohlfasermembranen verbundenen Permeatsammelraum und einen Permeatauslass enthalten. Dabei kann entweder nur das Kopfelement oder zusätzlich auch das Fußelement einen Permeatsammelraum und einen Permeatauslass aufweisen. Die Ausführung eines erfindungsgemäßen Membranfilters mit je einem Permeatsammelraum und je einem Permeatauslass im Kopfelement und im Fußelement ist konstruktiv aufwändiger und daher nur in dem Fall sinnvoll, wenn die Länge oder der Lumendurchmesser der Hohlfasermembranen die Abführung des entstehenden Permeates aufgrund des Druckverlustes im Lumen limitieren. Die Abführung des Permeates zu beiden Seiten der Hohlfasermembranen toleriert eine größere Länge der Hohlfasermembranen und einen kleineren Durchmesser des Lumens der Hohlfasermembranen, wodurch höhere Packungsdichten im Membranfilter realisierbar werden.

Bei der erfindungsgemäßen Ausgestaltung des Membranfilters mit einem Fuß- und einem Kopfelement, ist es vorteilhaft, wenn das Kopfelement einen Membranträger mit ähnlichem Querschnitt wie das Fußelement im Auslass aufweist.

Bei der erfindungsgemäßen Ausgestaltung des Membranfilters mit einem Kopfelement ist es sinnvoll, die Flüssigkeit vor dem Einlassen in den Membranfilter weitgehend von Störstoffen zu befreien, was im Falle von Membranbioreaktoren üblicherweise durch eine Feinsiebung des Schlamms erreicht wird, um ein Festsetzten der Störstoffe zwischen den Hohlfasermembranen unterhalb des Kopfelementes zu minimieren. Aus dem gleichen Grund ist es bei dieser Ausgestaltung des erfindungsgemäßen Membranfilters sinnvoll, dass das Rohr mit geschlossenem Umfang nicht bis zum Kopfelement geführt wird, was allerdings nur für den getauchten Betrieb des Membranfilters möglich ist.

Die einfachste Form eines erfindungsgemäßen Membranfilters, bei dem das Rohr nicht bis zum Kopfelement geführt wird, lässt die Distanz zwischen dem oberen Ende des Rohres und dem Kopfelement offen. Dadurch kann die Flüssigkeit vor Erreichen des Kopfelementes schon aus dem Membranfilter ausströmen, was die Verblockungsneigung des Kopfelementes reduziert. Bei der erfindungsgemäßen Ausgestaltung des Membranfilters ist es vorteilhaft, wenn sich an das Rohr mit geschlossenem Umfang, das nicht bis zum Kopfelement des Membranfilters geführt wird, oben ein Rohraufsatz mit Öffnungen im Umfang anschließt. Die Öffnungen haben den Sinn, einen Teil der Flüssigkeit aus dem Membranfilter bereits vor Erreichen des Kopfelementes ausströmen zu lassen. Auch dadurch wird das Festsetzen von Haaren und faserigen Verbindungen unterhalb des Kopfelementes reduziert. Es ist vorteilhaft, das Rohr mit geschlossenem Umfang mindestens bis zur Hälfte der Distanz zwischen Fuß- und Kopfelement zu führen, um den Mammutpumpeneffekt auszunutzen und eine weitgehend parallel zu den Hohlfasermembranen verlaufende Strömung zu erzeugen. Dadurch wird zudem vermieden, dass von außen zu filtrierende Flüssigkeit über den Umfang des Rohres einströmt, was zu strömungstechnisch ungünstigen Querströmungen im Membranfilter führen würde. Das Rohr und der Rohraufsatz können aus einem Teil bestehen.

Aufgrund des Mammutpumpeneffektes wird in dem erfindungsgemäßen Membranfilter bereits im Fußelement eine hohe Strömungsgeschwindigkeit erzeugt. Die Kombination der Strömung der Flüssigkeit mit der Gasströmung ist einerseits vorteilhaft, um einer Verblockung des Fußelementes entgegenzuwirken. Es birgt aber andererseits die Herausforderung, das Gas gleichmäßig über den Querschnitt des Strömungsraumes im Fußelement zu verteilen. Denn aufgrund der hohen Strömungsgeschwindigkeit der zu filtrierenden Flüssigkeit steigen Gasblasen direkt an der Stelle ihres Eintrags in die Flüssigkeit vertikal nach oben mit nur einer geringen Durchmischungstendenz in horizontaler Richtung.

Bei im Hintergrund der Erfindung bekannten Membranfiltern, die den Mammutpumpeneffekt ausnutzen, wird eine Verteilung des Gases in der Flüssigkeit daher über eine vertikal ausgerichtete Mischkammer oder Einströmzone erreicht, in der die Flüssigkeit sich auch in horizontaler Richtung über den Strömungsquerschnitt ausbreiten kann. US 5,482,625 beschreibt eine solche Einströmzone bei Plattenmodulen mit seitlicher Begrenzung entsprechend dem Rohr der vorliegenden Anmeldung. Die vertikal ausgedehnten Einströmzonen oder Mischkammern haben jedoch den bereits weiter oben beschriebenen Nachteil des höheren Energiebedarfs für die Begasung, da das Gas in einer größeren Einblastiefe eingetragen wird.

Die gleichmäßige Verteilung des Gases über den Querschnitt des Strömungsraumes im Fußelement wird bei einer erfindungsgemäßen Ausgestaltung des Membranfilters über ein Gasverteilsystem erreicht zum Einbringen des Gases an mehreren Stellen unterhalb des Membranträgers in die Flüssigkeit.

Bei einem erfindungsgemäßen Membranfilter verschließt der Membranträger das Fußelement bis auf den Strömungsraum nicht nur für die Durchströmung der Flüssigkeit sondern auch für die Durchströmung des Gases vollständig.

Ausgehend von den bekannten Verfahren wird nach der Erfindung vorgeschlagen, dass das Gas durch den Gaseinlass in den mindestens einen Strömungsraum einströmt, und anschließend das Gas gemeinsam mit der Flüssigkeit das Fußelement in dem mindestens einen Strömungsraum zwischen dem Mantel und dem Membranträger durchströmt und durch den Auslass in das Rohr einströmt, wobei der mindestens eine Strömungsraum in den erfindungsgemäßen Membranträger hineinragende Ausbuchtungen aufweist. Ein solches erfindungsgemäßes Verfahren wird in einem erfindungsgemäßen Membranfilter ausgeführt und zeichnet sich gleichfalls durch die dort genannten Vorteile aus.

In einer bevorzugten Ausführung des erfindungsgemäßen Verfahrens umströmen die Flüssigkeit und das Gas den Membranträger in mindestens einem der horizontalen Schnitte durch den Membranträger vollständig. Jede Verbindungsstelle zwischen Membranträger und Mantel, die in dem erfindungsgemäßen Membranfilter als Ankerstellen bezeichnet werden, birgt das Risiko, dass sich in dem Strömungsschatten oberhalb dieser Verbindungsstelle Partikel oder Feststoffe der Flüssigkeit ablagern und zu Verblockungen im darüber befindlichen Bereich der Hohlfasermembranen führen. Dies ist insbesondere dann der Fall, wenn die Ankerstellen sich vertikal bis zum Auslass des Fußelementes in ihrer vollen Breite erstrecken. Dieses Risiko kann vermieden werden, indem sich die Ankerstellen in vertikaler Richtung nach oben verjüngen und bereits vor dem Auslass des Fußelementes enden. Im Bereich der Verjüngung kann die Zweiphasenströmung aus Gas und Flüssigkeit sich in den Strömungsschatten der Ankerstellen ausdehnen und so oberhalb der Ankerstellen den Membranträger vollständig umströmen.

Zur Ausführung eines erfindungsgemäßen Verfahrens kann der Membranfilter in die Flüssigkeit getaucht sein. Der Membranfilter ist dann von der Flüssigkeit umgeben und aufgrund des Mammutpumpeneffektes des in das Fußelement eingeleiteten und im Membranfilter aufsteigenden Gases wird die Flüssigkeit von unten in das Fußelement angesaugt und durchströmt gemeinsam mit dem Gas die Filtereinheit, bevor beide oben aus der Filtereinheit ausströmen.

Im Rahmen eines erfindungsgemäßen Verfahrens kann die Flüssigkeit mittels einer ersten Flüssigkeitsleitung dem Fußelement zugeführt und mittels einer zweiten Flüssigkeitsleitung oben aus dem Membranfilter abgeführt werden, wobei die zweite Flüssigkeitsleitung oberhalb der Hohlfasermembranen an einem Rohr angeschlossen ist, das an das Fußelement oben anschließend die Hohlfasermembranen umgibt. Diese Variante des Betriebs einer erfindungsgemäßen Filtereinheit wird auch als "trocken aufgestellter" Betrieb bezeichnet.

In dem erfindungsgemäßen Verfahren erzeugt aufgrund des sich an den Mantel des Fußelementes oben anschließenden Rohres das eingetragene Gas einen starken Mammutpumpeneffekt in dem erfindungsgemäßen Membranfilter, der insbesondere auch eine hohe Strömungsgeschwindigkeit im Strömungsraum des Fußelementes erzeugt. Diese ist eine zusätzliche Triebkraft, um Ablagerungen und beginnende Verblockungen in dem Strömungsraum selbständig frei zu spülen.

Bei der Realisierung größerer Filtereinheiten können mehrere erfindungsgemäße Membranfilter auf einem gemeinsamen Rahmen parallel nebeneinander montiert werden. Dabei werden die Permeatauslässe der einzelnen Membranfilter mit Rohrleitungen verbunden, die der Ableitung des entstehenden Permeates aus den Membranfiltern dienen. Auch die Gaseinlässe werden mit Rohrleitungen verbunden, die der Zuführung des Gases in die Membranfilter dienen. Dabei werden die Gaszuführungsleitungen einzeln mit Drosseln ausgestattet zur Vergleichmäßigung der Luftzuführung auf die einzelnen Membranfilter. Vorteilhaft ist es dabei, die Drosseln in den Gaszuführungsleitungen oberhalb der Flüssigkeitsoberfläche zu positionieren, um auch beim Abschalten des Filters ein Fluten der Drosselquerschnitte zu vermeiden und damit eine Verstopfung der Drosseln durch Feststoffbestandteile der Flüssigkeit auszuschließen.

### Ausführungsbeispiel

Die Erfindung wird nachfolgend anhand von Ausführungsbeispielen erläutert. Es zeigen
- Fig. 1a bis1e: einen ersten Membranfilter (Gesamtschnitt Teilschnitte und Ansichten des Fußelementes),
- Fig. 2a bis 2c: Strömungsverhältnisse im ersten Membranfilter,
- Fig. 3: den ersten Membranfilter im Tauchbetrieb,
- Fig. 4: den ersten Membranfilter im trocken aufgestellten Betrieb,
- Fig. 5a bis 5i: Details eines zweiten erfindungsgemäßen Membranfilters,
- Fig. 6a bis 6c: Teilansichten und Schnitte des Gasverteilsystems des zweiten Membranfilters,
- Fig. 7a bis 7d: weitere erfindungsgemäße Membranfilter,
- Fig. 8a bis 8c: Details weiterer erfindungsgemäßer Membranfilter,
- Fig. 9a bis 9c: Membranträger weiterer erfindungsgemäßer Membranfilter....

Die in den Figuren dargestellten Zeichnungen sind nicht maßstäblich. Alle nicht angegebenen Details von im Folgenden beschriebenen erfindungsgemäßen Membranfiltern sind identisch mit den Ausführungen bereits zuvor beschriebener erfindungsgemäßer Membranfilter.

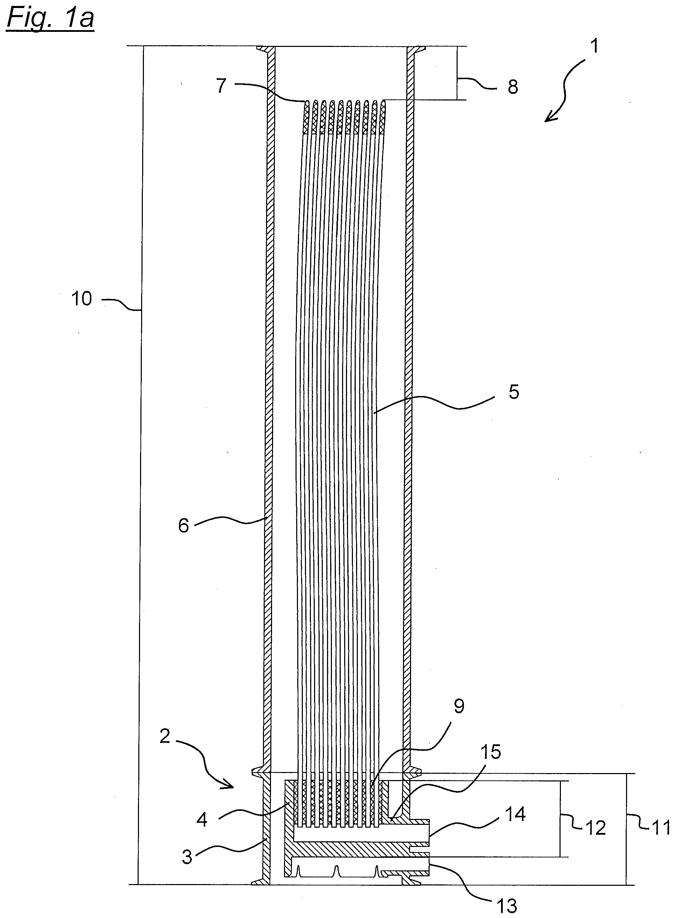

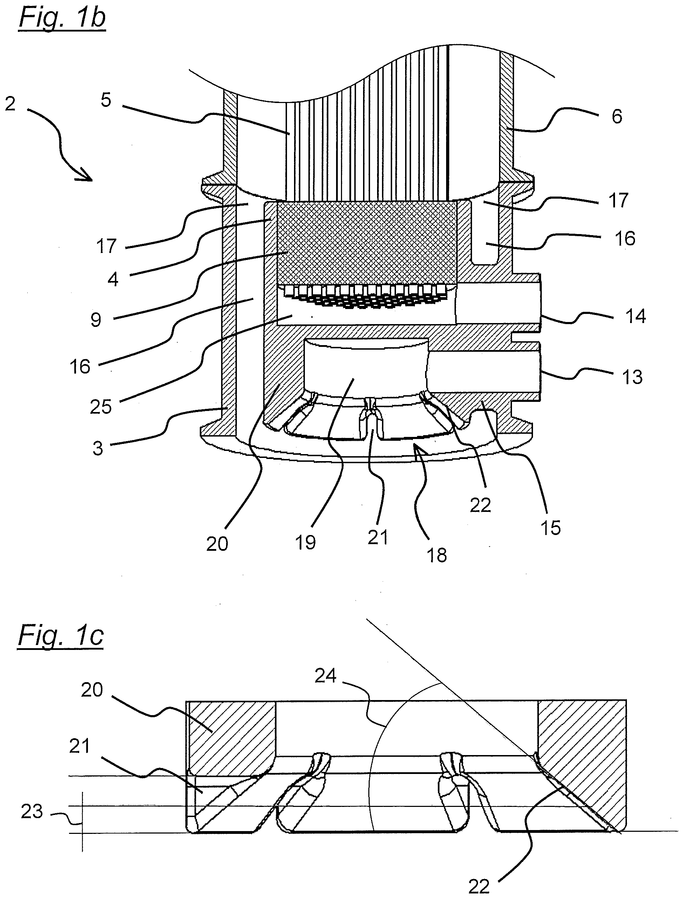

Die Figuren 1a bis 1e zeigen Schnitte und Ansichten eines ersten Membranfilters 1. Dieser weist ein Fußelement 2 auf mit einem Mantel 3 und einen sich darin befindlichen Membranträger 4, in dem oben Hohlfasermembranen 5 befestigt sind. An den Mantel 3 des Fußelementes 2 schließt oben ein zylindrisches Rohr 6 an.

Die Hohlfasermembranen 5 sind gewebeverstärkt und haben einen Außendurchmesser von 2,5 mm. Sie sind am oberen Ende 7 einzeln verschlossen. Das Rohr 6 überragt das obere Ende 7 um eine Länge 8 von 10 cm. Die Hohlfasermembranen 5 sind unten in dem Membranträger 4 über eine Harzschicht 9 abdichtend eingegossen, wobei Lumen der Hohlfasermembranen 5 offen bleiben.

Der Membranfilter 1 weist eine Höhe 10 von 200 cm, das Fußelement 2 eine Höhe 11 von 12 cm und der Membranträger 4 eine Höhe 12 von 11 cm auf. Das Fußelement 2 und das Rohr 6 weisen beide einen Außendurchmesser von 75 mm auf. Das Rohr 6 weist einen Innendurchmesser von 68 mm auf. Das Fußelement 2 weist ferner einen Gaseinlass 13 und einen Permeatauslass 14 auf.

Der Membranträger 4 ist über eine Ankerstelle 15 mit dem Mantel 3 verbunden. Das Fußelement 2 weist zwischen Mantel 3 und Membranträger 4 einen Strömungsraum 16 auf, der als Ringspalt mit einer Breite von 9 mm ausgebildet ist, den Membranträger 4 umgibt und nur durch die Ankerstelle 15 unterbrochen wird. Der Strömungsraum 16 grenzt in jedem horizontalen Schnitt sowohl an den Mantel 3 als auch an den Membranträger 4.

Der Strömungsraum 16 wird in vertikaler Richtung durch den Überschneidungsbereich der Höhe 11 des Fußelementes 2 und der Höhe 12 des Membranträgers 4 begrenzt. Das Fußelement 2 ist nach unten offen und durchströmbar. Der Strömungsraum 16 weist oben einen Auslass 17 in das Rohr 6 auf.

Der Gaseinlass 13 ist mit einem auf der Unterseite des Membranträgers 4 ausgebildeten Gasverteilsystem 18 verbunden, das eine nach unten offene und oben geschlossene Wanne 19 aufweist, die eine Wandung 20 aufweist mit nach unten offenen vertikalen Schlitzen 21. Die Wanne 19 weist jeweils mittig zwischen benachbarten Schlitzen 21 in einem vertikalen, orthogonal zur Wandung 20 verlaufenden Schnitt eine Innenkante 22 auf, die über die gesamte Höhe der Schlitze 21 eine schräge Kante ist, deren Winkel 24 zur Horizontalen 40° beträgt. Alternativ kann die Innenkante 22 im Bereich einer unteren Hälfte 23 der Schlitze 21 in jedem Punkt einen Winkel 24 zur Horizontalen von kleiner als 60° aufweisen.

Das Fußelement 2 weist ferner einen Permeatsammelraum 25 auf, in den die Lumen der Hohlfasermembranen 5 münden. Der Permeatsammelraum 25 ist mit dem Permeatauslass 14 des Fußelementes 2 verbunden.

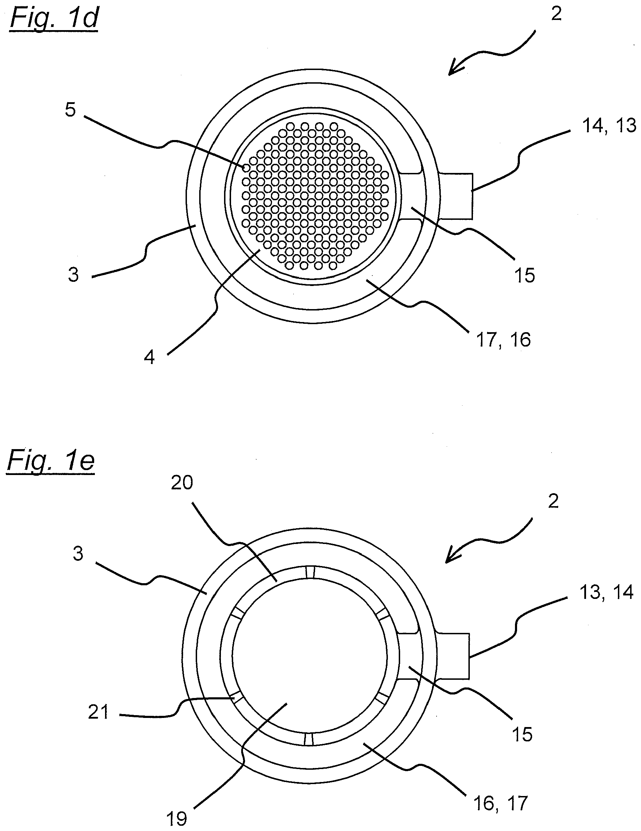

Figur 1d zeigt eine Draufsicht auf das Fußelement 2 mit den Hohlfasermembranen 5 ohne das Rohr 6. Die Anzahl der dargestellten Hohlfasermembranen 5 entspricht nicht der tatsächlichen Anzahl der Hohlfasermembranen 5. Und Figur 1e zeigt eine Ansicht des Fußelementes 2 von unten. Die Anzahl der Schlitze 21 beträgt 6. Diese sind über den Umfang der Wanne 19 in deren Wandung 20 gleichmäßig verteilt.

Der Permeatauslass 14 und der Gaseinlass 13 liegen in Verlängerung der Ankerstelle 15 radial nach außen.

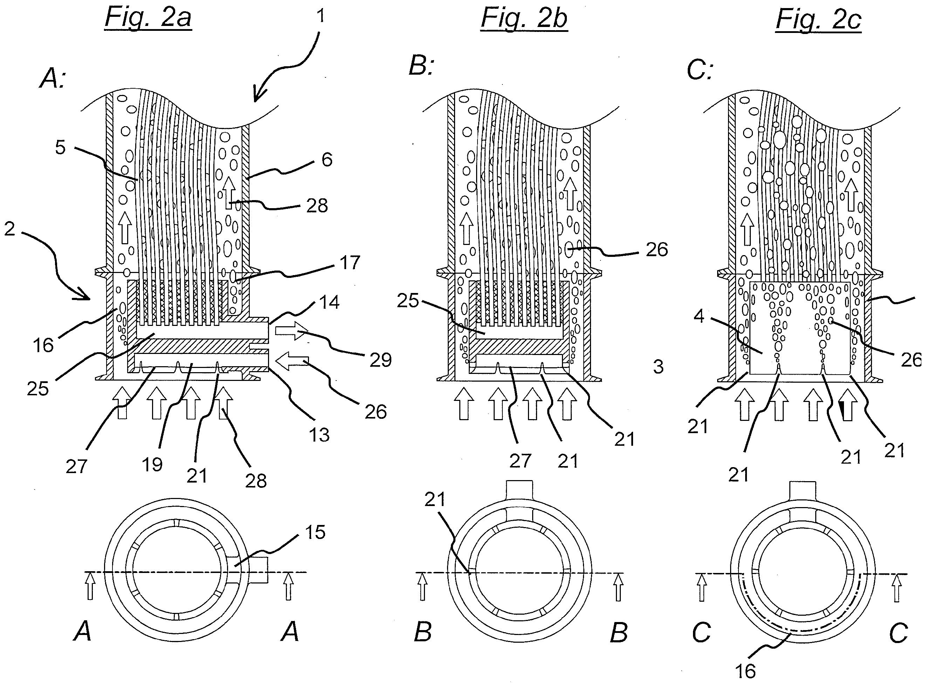

Die Figuren 2a bis 2c zeigen die Strömungsverhältnisse im Fußelement 2 und im unteren Teil des Rohres 6 des ersten Membranfilters 1 während des Filtrationsbetriebs.

Dabei zeigt Figur 2a einen ersten vertikalen Schnitt durch den unteren Teil des Membranfilters 1, wobei der Schnitt auch durch die Ankerstelle 15 verläuft.

Durch den Gaseinlass 13 wird im Betrieb des Membranfilters 1 ein Gas 26 in das Fußelement 2 und den Strömungsraum 16 eingeleitet. Dabei strömt das Gas 26 über den Gaseinlass 13 zunächst in die Wanne 19 ein. Das Gas 26 füllt die Wanne 19 bis zu einem Teil der Höhe der Schlitze 21 und bildet in der Wanne 19 ein Gaspolster 27. Das Gas 26 füllt auch die Schlitze 21 bis zur Höhe des Gaspolsters 27 und strömt schließlich über den mit Gas 26 gefüllten Teil der Schlitze 21 seitlich aus der Wanne 19, bzw. aus dem Gaspolster 27 aus und dabei in eine zu filtrierende Flüssigkeit 28 ein.

Bis auf den Strömungsraum 16 verschließt der Membranträger 4 das Fußelement 2 vollständig für die Durchströmung der Flüssigkeit 28 und des Gases 26, d.h. bis auf den Strömungsraum 16 gibt es in dem Fußelement 2 keine weiteren Durchgangsöffnungen für das Gas 26 und die Flüssigkeit 28.

Oberhalb des Fußelementes 2 gibt es in dem Rohr 6 außer den Hohlfasermembranen 5 keine weiteren Einbauten. Daher schweben die Hohlfasermembranen 5 nur unten fixiert ohne Behinderung frei in der Flüssigkeit 28. Somit können sich auch Haare, faserige Verbindungen oder sonstige Störstoffe aus der Flüssigkeit 28 nicht in diesem Bereich festsetzen.

Beim seitlichen Durchströmen durch die Schlitze 21 generiert das Gas 26 eine parallel zur seitlichen Gasströmung radial nach außen gerichtete Flüssigkeitsströmung an der Phasengrenzfläche unterhalb des Gaspolsters 27. Diese strömt zwischen jeweils benachbarten Schlitzen 21 die Innenkante 22 der Wandung 20 an, die in jedem Punkt im Bereich der Schlitze einen Winkel zur Horizontalen von kleiner als 60° aufweist. An dieser schrägen Innenkante werden in der zu filtrierenden Flüssigkeit 28 enthaltene Haare und faserige Verbindungen durch die nach außen gerichteten Gasströmung und Flüssigkeitsströmung abgestreift, wodurch die Gefahr des Festsetzens dieser Störstoffe im Membranfilter 1 reduziert wird.

Nach dem Durchströmen der Schlitze 21 steigt das Gas 26 durch seinen Auftrieb in dem Membranfilter 1 auf und erzeugt dadurch eine Aufwärtsströmung der Flüssigkeit 28. Diese wird in den Membranfilter 1 nur von unten eingesaugt. Das Gas 26 und die Flüssigkeit 28 durchströmen den Strömungsraum 16 des Fußelementes 2, strömen danach gemeinsam durch den Auslass 17 in das Rohr 6 ein und oben am Rohr 6 aus dem Membranfilter 1 aus.

Durch die hohe Scherkraftwirkung der Zweiphasenströmung aus Flüssigkeit 28 und Gas 26, die durch den Mammutpumpeneffekt im Membranfilter 1 aufsteigt, werden im Strömungsraum 16 des Fußelementes 2 der Membranträger 4 und im Rohr 6 die Hohlfasermembranen 5 außen gespült, und dadurch Beläge und Ablagerungen von den Oberflächen des Membranträgers 4 und der Hohlfasermembranen 5 abgespült und aus dem Membranfilter 1 ausgetragen.

Zwischen der Außenseite der Hohlfasermembranen 5 und deren Lumen liegt eine Druckdifferenz an, aufgrund derer ein flüssiges Permeat 29 aus der Flüssigkeit 28 filtriert wird und in die Lumen der Hohlfasermembranen 5 strömt. Das Permeat 29 wird aus den Lumen der Hohlfasermembranen 5 gesammelt und strömt dann durch den Permeatauslass 14 aus dem Membranfilter 1 aus.

Durch die Ankerstelle 15 erfolgen sowohl die Zufuhr des Gases 26 als auch die Abfuhr des im Membranfilter 1 filtrierten Permeates 29.

Der Gaseinlass 13 ist strömungstechnisch mit dem Strömungsraum 16 innerhalb des Fußelementes 2 verbunden, so dass das Fußelement 2 vom Gaseinlass 13 durch die Wanne 19, durch die Schlitze 21 und durch den Strömungsraum 16 bis zum Auslass 17 durchströmbar ist.

Figur 2b zeigt einen weiteren, jedoch um 90° versetzten Schnitt durch den unteren Teil des ersten Membranfilters 1. Dabei wird die Ankerstelle 15 nicht geschnitten, dafür aber zwei der Schlitze 21. Zu erkennen ist das seitliche Ausströmen des Gases 26 durch die Schlitze 21 aus der Wanne 19, bzw. aus dem Gaspolster 27. Zudem ist in diesem Schnitt der Permeatsammelraum 25, nicht aber der Permeatauslass 14 zu sehen.

Figur 2c zeigt einen weiteren Schnitt durch den unteren Teil des ersten Membranfilters 1, der in diesem Fall nur den Mantel 3 schneidet und ansonsten durch den Strömungsraum 16 verläuft, so dass die Außenseite des Membranträgers 4 sichtbar wird. Dabei ist das seitliche Ausströmen des Gases 26 aus den Schlitzen 21 zu erkennen.

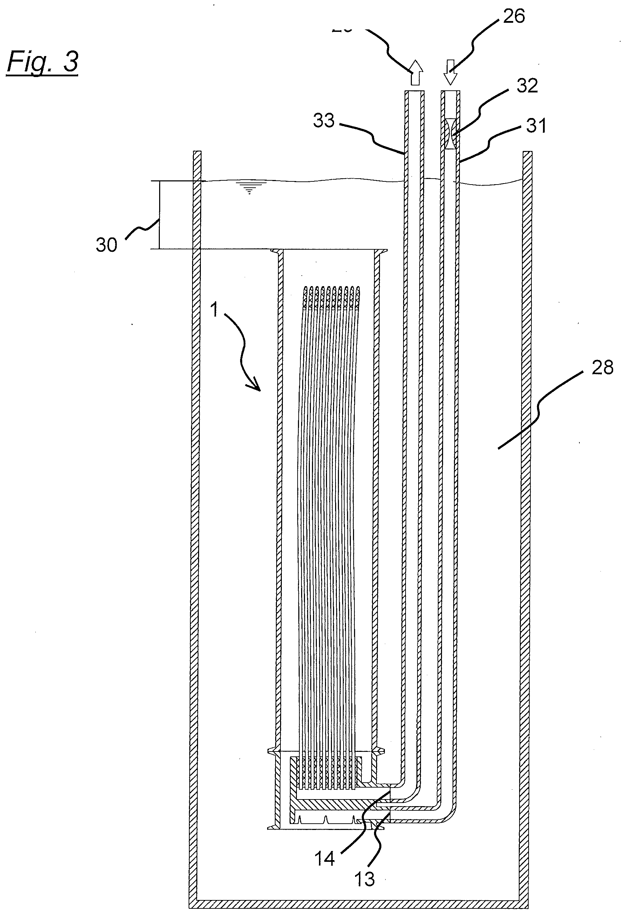

Figur 3 zeigt den ersten Membranfilter 1 im Tauchbetrieb. Gasblasen in der Flüssigkeit 28 sind dabei nicht dargestellt. Dabei wird der Membranfilter 1 in ein Becken mit der zu filtrierenden Flüssigkeit 28 eingetaucht, so weit dass ein Flüssigkeitsüberstand 30 von 15 cm oberhalb des Membranfilters 1 bis zur Oberfläche der Flüssigkeit 28 bleibt. Über eine Gaszuführleitung 31 wird das Gas 26 von oberhalb der Oberfläche der Flüssigkeit 28 zum Gaseinlass 13 geführt. In der Gaszuführleitung 31 ist eine Drossel 32 eingebaut. Diese ist an dieser Stelle exemplarisch dargestellt und ist nur erforderlich, wenn mehrere Membranfilter 1 parallel betrieben und gleichzeitig mit Gas 26 versorgt werden. Die Drosseln 32 in den Gaszuführleitungen 31 dienen dann dazu, die in die einzelnen Membranfilter 1 strömenden Mengen an Gas 26 zu vergleichmäßigen. Die Drossel 32 ist oberhalb der Oberfläche der zu filtrierenden Flüssigkeit 28 angeordnet. Über eine Permeatleitung 33 wird das im Membranfilter 1 entstehende Permeat 24 vom Permeatauslass 14 abgeleitet.

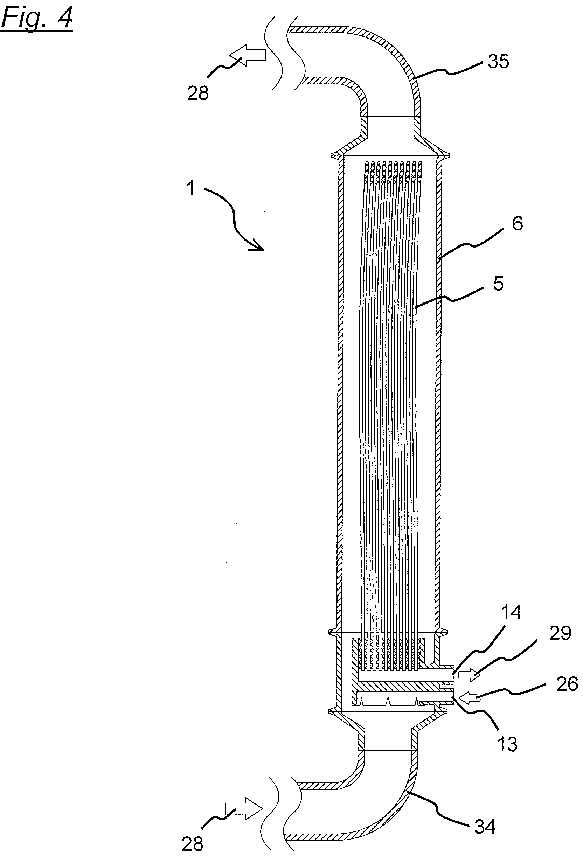

Figur 4 zeigt den ersten Membranfilter 1 im trocken aufgestellten Betrieb. Gasblasen in der zu filtrierenden Flüssigkeit 28 sind dabei nicht dargestellt. Die Flüssigkeit 28 wird über eine erste Flüssigkeitsleitung 34 dem Membranfilter 1 zugeführt. Aus der Flüssigkeit 28 wird ein Permeat 29 filtriert, das den Permeatauslass 14 verlässt. Durch den Gaseinlass 13 wird das Gas 26 zugeführt. Über eine zweite Flüssigkeitsleitung 35 werden das Gas 26 und die Flüssigkeit 28 abzüglich des Permeates 29 abgeführt. Die zweite Flüssigkeitsleitung 35 ist oben an das Rohr 6 angeschlossen, das die Hohlfasermembranen 5 überragt.

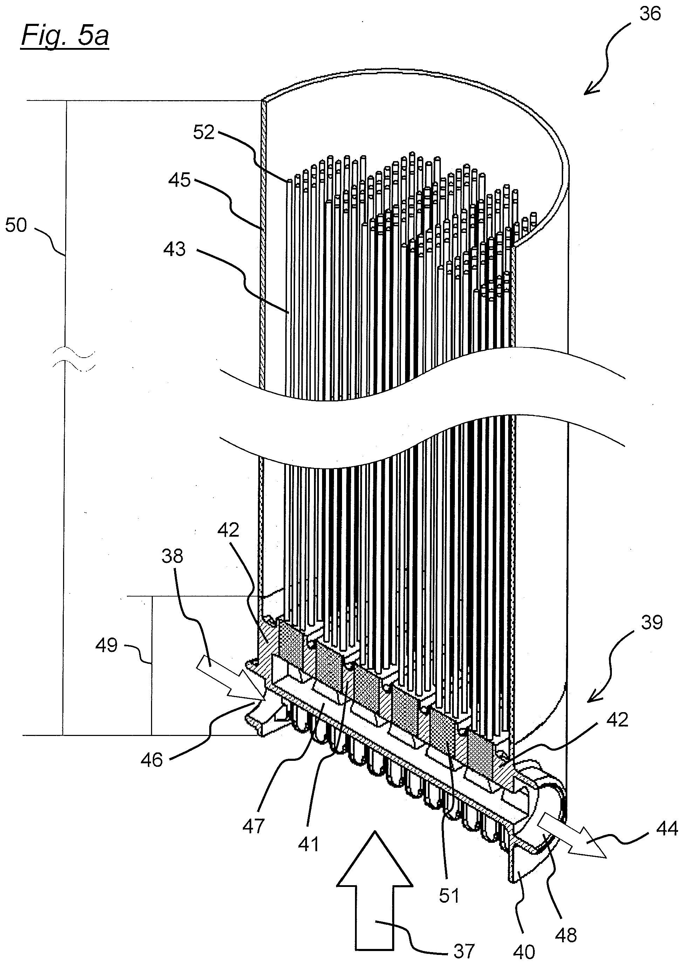

Die Figuren 5a bis 5g zeigen Ansichten und unterschiedliche Schnitte eines zweiten erfindungsgemäßen Membranfilters 36.

Figur 5a zeigt einen Längsschnitt durch den zweiten Membranfilter 36. Dieser weist ein nach unten zu einer zu filtrierenden Flüssigkeit 37 hin offenes, von einem Gas 38 und der Flüssigkeit 37 durchströmbares Fußelement 39 auf, das einen rohrförmigen Mantel 40 und genau einen darin befindlichen Membranträger 41 aufweist, wobei der Membranträger 41 mit dem Mantel 40 über zwei Ankerstellen 42 verbundenen ist. Oben in dem Membranträger 41 sind Hohlfasermembranen 43 befestigt mit jeweils einem Lumen, in das ein flüssiges Permeat 44 aus der Flüssigkeit 37 filtrierbar ist. Zudem weist der Membranfilter 36 ein im Umfang geschlossenes Rohr 45 auf, dass an den Mantel 40 des Fußelementes 39 oben anschließend die Hohlfasermembranen 43 umgibt, sowie einen Gaseinlass 46 zum Einlassen des Gases 38 in das Fußelement 39. Das Fußelement 39 weist ferner einen Permeatsammelraum 47 auf, der mit den Lumen der Hohlfasermembranen 43 verbunden ist, zum Sammeln des Permeates 44 aus den Hohlfasermembranen 43 sowie einen Permeatauslass 48 zum Ablassen des Permeates 44 aus dem Permeatsammelraum 47.

Das Fußelement 31 hat eine Höhe 49 von 12 cm und der Membranfilter 36 eine Höhe 50 von 212 cm. Die Hohlfasermembranen 43 sind unten in dem Membranträger 41 über eine Harzschicht 51 gegen die zu filtrierende Flüssigkeit 37 abdichtend eingegossen, wobei die Lumen der Hohlfasermembranen 43 offen bleiben. Die Anzahl der dargestellten Hohlfasermembranen 43 entspricht nicht der tatsächlichen Anzahl der Hohlfasermembranen 43. Die Hohlfasermembranen 43 sind oben einzeln verschlossen und schweben bis auf die untere Einspannung oben frei in der zu filtrierenden Flüssigkeit 37. Sie werden vollständig vom Rohr 45 umschlossen. Das Rohr 45 ragt um 10 cm über die oberen Enden 52 der Hohlfasermembranen 43 hinaus.

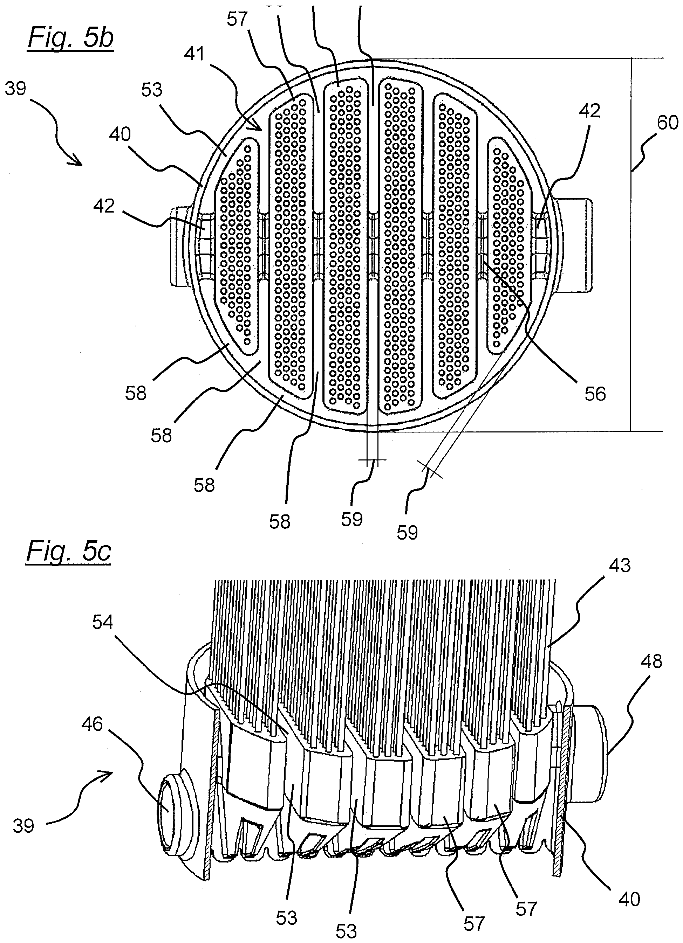

Figur 5b zeigt eine Draufsicht auf das Fußelement 39 des zweiten Membranfilters 36 und Figur 5c eine perspektivische Ansicht mit aufgeschnittenem Mantel 40. Zwischen dem Mantel 40 und dem Membranträger 41 weist das Fußelement 39 einen nach unten offenen Strömungsraum 53 zum Durchströmen der zu filtrierenden Flüssigkeit 37 auf, der oben einen Auslass 54 aufweist zum Auslassen der zu filtrierenden Flüssigkeit 37 in das Rohr 45.

Der Strömungsraum 53 hat Ausbuchtungen 55, die in den Membranträger 41 hineinragen bis zu einem Anker 56 des Membranträgers 41. Dadurch werden am Membranträger 41 sechs Finger 57 ausgebildet, die über den Anker 56 des Membranträgers 41 verbunden sind. Die beiden Ankerstellen 42 stehen in Verlängerung des Ankers 56, wobei durch die eine der Gaseinlass 46 und durch die andere der Permeatauslass 48 verläuft. Die beiden Ankerstellen 42 sind die einzigen Verbindungen des Membranträgers 41 mit dem Mantel 40. Die Bestückung des Membranträgers 41 mit den Hohlfasermembranen 43 erfolgt beim zweiten Membranfilter 36 nur im Bereich der Finger 57, wobei der Bereich zwischen den Fingern oberhalb des Ankers 56 aus fertigungstechnischen Gründen ausgespart bleibt. Die Hohlfasermembranen 43 des zweiten Membranfilters 36 sind gewebeverstärkt und haben einen Außendurchmesser von 2,5 mm.

Im Bereich des Ankers 56 gibt es im Fußelement 39 einen horizontalen Schnitt, in dem der Strömungsraum 53 zwei zusammenhängende Strömungskanäle 58 ausbildet, die im Ringspalt im äußeren Bereich der Finger 57 eine einheitliche Breite 59 von 6 mm aufweisen. Auch zwischen den Fingern 57 hat der Strömungskanal 58 die gleiche Breite 59 von 6 mm. Da die Kanten der Finger 57 aus strömungstechnischen Gesichtspunkten abgerundet sind, weisen die beiden Strömungskanäle 58 an den Kanten der Finger 57 eine geringfügig größere Breite als 6 mm auf. Insgesamt weisen die beiden Strömungskanäle 58 auf mehr als 80 % ihrer Länge die einheitliche Breite 59 von 6 mm auf.

Der Strömungsraum 53 grenzt in jedem horizontalen Schnitt sowohl an den Mantel 40 als auch an den Membranträger 41 und wird nur durch die beiden Ankerstellen 42 unterbrochen. Der Membranträger 41 verschließt das Fußelement 39 bis auf den Strömungsraum 53 vollständig, d.h. das Fußelement 39 weist außer dem Strömungsraum 53 keine weiteren Durchflusskanäle für die zu filtrierende Flüssigkeit 37 oder das Gas 38 auf.

Der Durchmesser 60 des Fußelementes 39 des zweiten Membranfilters 36 beträgt 208 mm.

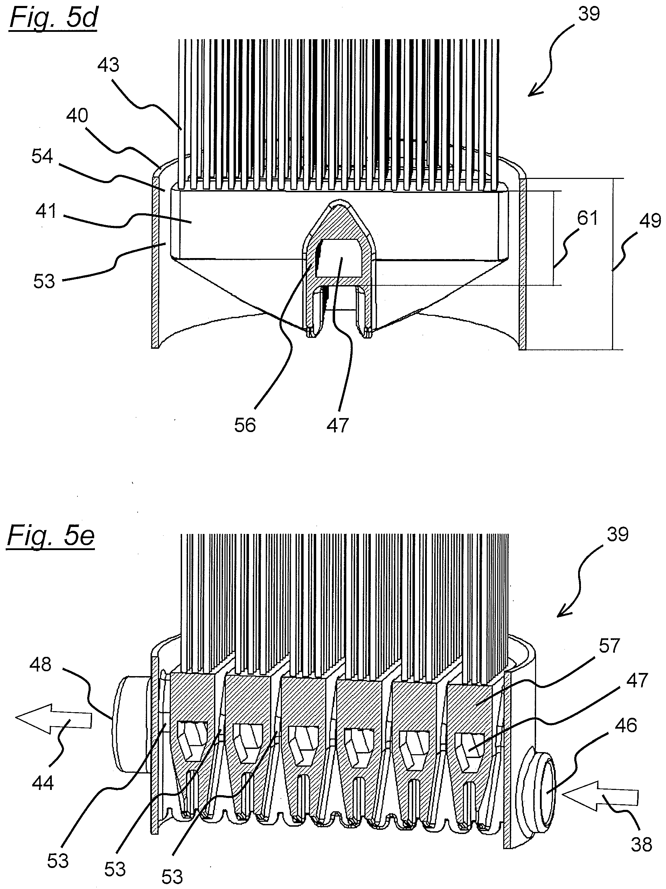

Figur 5d zeigt einen Schnitt durch das Fußelement 39 des zweiten Membranfilters 36, derart, dass der Anker 56 genau im Strömungsraum 53 zwischen zwei Fingern 57 geschnitten wird. Innerhalb des Ankers 56 befindet sich ein Teil des Permeatsammelraums 47. Der Strömungsraum 53 wird in vertikaler Richtung durch den Überschneidungsbereich der Höhe 49 des Fußelementes 39 und einer Höhe 61 des Membranträgers 41 begrenzt. An der Unterseite des Membranträges ist ein Gasverteilsystem 62 ausgebildet, dessen Höhe bei der Definition des Strömungsraums 53 unberücksichtigt bleibt. Der Strömungsraum 53 endet oben im Auslass 54.

Wie in Figur 5d und Figur 5e zu erkennen ist, sind die Finger 57 unten in beiden horizontalen Richtungen abgeschrägt, wodurch der Membranträger 41 eine sich nach unten verringernde, horizontale Querschnittsfläche aufweist. Dadurch bleiben in der zu filtrierenden Flüssigkeit 37 enthaltene Haare und faserige Verbindungen nicht an den Fingern 57 hängen sondern werden entlang der Schräge der Finger 57 in den Strömungsraum 53 abgestreift, durch diesen hindurchgespült und gelangen danach in den Bereich der Hohlfasermembranen 43 im Rohr 45. Da in diesem Bereich außer den oben einzeln verschlossenen Hohlfasermembranen 43 keine weiteren Einbauten vorhanden sind, an denen sich Haare oder faserige Verbindungen festsetzen können, und da zudem die Hohlfasermembranfasern 43 oben einzeln verschlossen sind, können Haare und faserige Verbindungen frei nach oben aus dem Membranfilter 36 ausgespült werden.

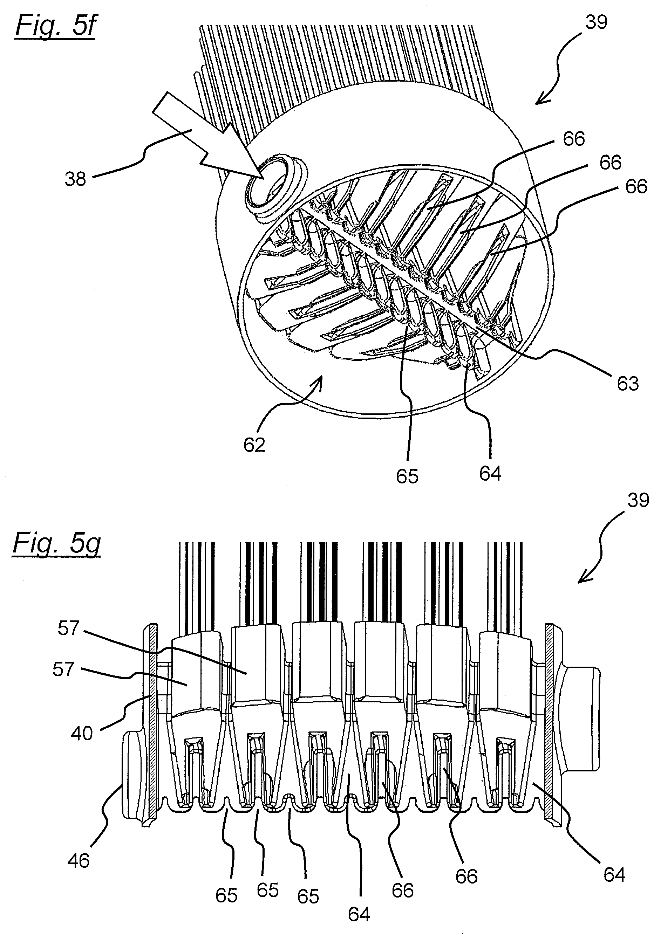

Figur 5f zeigt eine perspektivische Ansicht des Fußelementes 39 des zweiten Membranfilters 36 von schräg unten und Figur 5g eine Hälfte des Fußelementes 39 mit aufgeschnittenem Mantel 40.

Beim zweiten Membranfilter 36 weist das Fußelement 39 den Gaseinlass 46 auf. Dieser ist mit einem an der Unterseite des Membranträgers 41 ausgebildeten Gasverteilsystem 62 verbunden, das eine nach unten offene und oben geschlossene Wanne 63 aufweist, die eine Wandung 64 mit nach unten offenen, vertikalen Schlitzen 65 aufweist zum Verteilen des Gases 38 in die zu filtrierende Flüssigkeit 37. Die Breite der Wanne 63 entspricht der Breite des Ankers 56 und ist an dessen Unterseite ausgebildet. Der Gaseinlass 46 schließt direkt seitlich an die Wanne 63 an.

An jedem zweiten der Schlitze 65 ist außen an die Wanne 63 ein Gasleitkanal 66 angeschlossen, der an der Unterseite der Finger 57 ausgebildet ist, zum Weiterleiten des Gases 38 von der Wanne weg Richtung Mantel 40. Die anderen Schlitze 65, an die keine Gasleitkanäle 66 angeschlossen sind, münden jeweils zwischen zwei Fingern 57, bzw. bei den äußeren Fingern 57 zwischen diesen und dem Mantel 40 auf der Außenseite des Ankers 56. Somit weist die Wanne 63 auf jeder ihrer beiden Längsseiten eine Wandung 64 mit jeweils 13 Schlitzen 65 auf. Die Schlitze 65 werden nach unten breiter, um auch größere Schwankungen in der zugeführten Menge an Gas 38 kompensieren zu können.

Die Breite der Schlitze 65 und damit auch ihre Querschnittsfläche sind unterschiedlich groß. Dadurch wird die durch die Schlitze 65 strömende Menge des Gases 38 an die mit Gas 38 zu spülende Oberfläche der Hohlfasermembranen 43 angepasst. Dementsprechend weisen die Schlitze 65 unterhalb der längeren Finger 57 in der Mitte des Fußelementes 39 breitere Schlitze 65 auf als die äußeren Schlitze 65 unterhalb der kürzeren Finger 57. Die schmalsten Schlitze 65 sind diejenigen, die zwischen den Fingern 57 münden. Durch die Ausgestaltung des Gasverteilsystems 62 mit Schlitzen 65 und Gasleitkanälen 66 umströmt das Gas 38 den Membranträger 41 nach dem Einströmen in die zu filtrierende Flüssigkeit 37.

Das Fußelement 39 ist vom Gaseinlass 46 durch die Wanne 63, durch die Schlitze 65 und durch den Strömungsraum 53 bis zum Auslass 54 durchströmbar. Der Membranträger 41 verschließt das Fußelement 39 bis auf den Strömungsraum 53 nicht nur für die Durchströmung der zu filtrierenden Flüssigkeit 37 sondern auch für die Durchströmung des Gases 38.

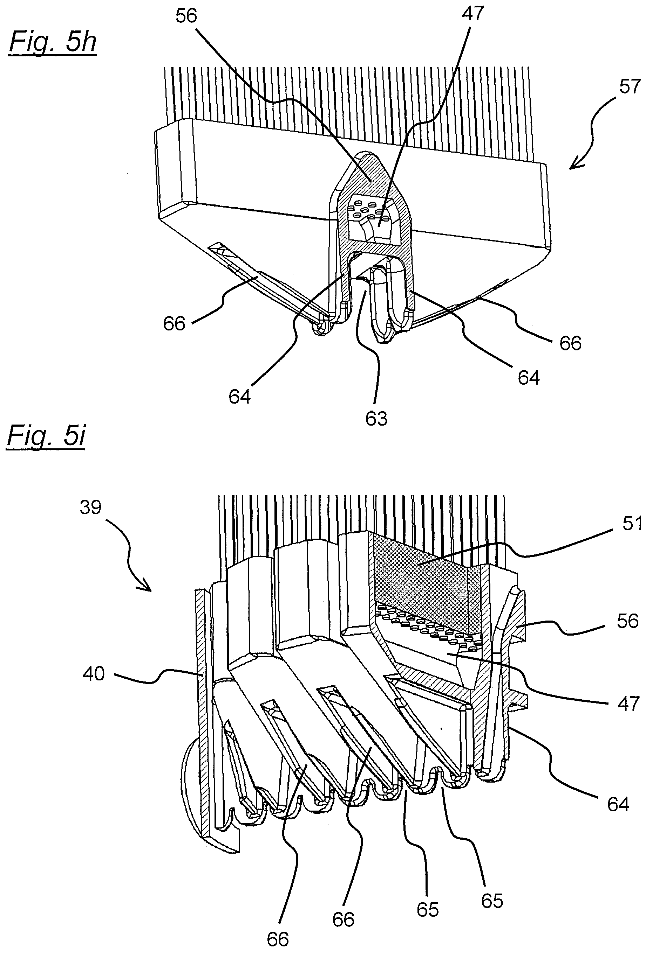

Figur 5h zeigt nur einen der Finger 57 des zweiten Membranfilters 36. Dabei ist im Schnitt der Anker 56 zu sehen und die auf dessen Unterseite ausgebildete Wanne 63. Zudem sind die auf der Unterseite des Fingers 57 zu beiden Seiten der Wanne 63 verlaufenden Gasleitkanäle 66 zu erkennen.

Figur 5i zeigt einen Schnitt durch den Gasleitkanal 66 in einem Ausschnitt des Fußelementes 39 des zweiten Membranfilters 36. Hierbei ist zu erkennen, dass die Gasleitkanäle 66 vertikal nach oben versetzt an die Schlitze 65 anschließen.

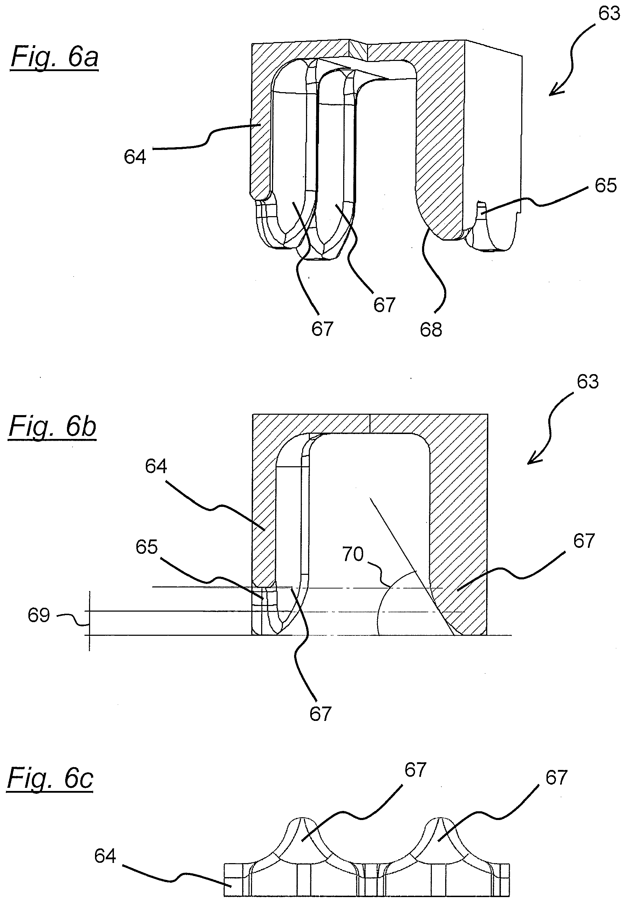

Die Figuren 6a bis 6c zeigen Ansichten und Schnitte von Teilen der Wanne 63 des zweiten Membranfilters 36.

Die Wanne 63 weist innen jeweils mittig zwischen benachbarten Schlitzen 65 orthogonal zur Wandung 64 verlaufende vertikale Rippen 67 auf. Jede Rippe 67 weist unten eine Verjüngung auf, die auf die Wandung 64 zuläuft und somit eine schräge, bzw. abgerundete Innenkante 68 der Wanne 63 ausbildet.

Geometrisch weist die Wanne 63 jeweils zwischen benachbarten Schlitzen 65 in einem vertikalen Schnitt, der in diesem Fall orthogonal zur Wandung 64 durch die Rippe 67 verläuft, eine Innenkante 68 auf, die mindestens im Bereich einer unteren Hälfte 69 der Schlitze 65 in jedem Punkt einen Winkel 70 zur Horizontalen von kleiner als 60°, auf Höhe der Hälfte 69 der Schlitze 65 von 58° aufweist.

Der nicht dargestellte Filtrationsbetrieb des zweiten Membranfilters 36 unterscheidet sich vom Filtrationsbetrieb des ersten Membranfilters 1 folgendermaßen:
Das Gas 38 strömt durch den Gaseinlass 46 in die Wanne 63 ein und füllt diese und die Schlitze 65 bis zu einem Teil der Höhe der Schlitze 65 mit einem Gaspolster. Aus diesem strömt das Gas 38 durch die Schlitze 65 seitlich nach außen aus der Wanne 63 und dabei an mehreren Stellen unterhalb des Membranträgers 41 in die zu filtrierende Flüssigkeit 37. Das Gas 38 strömt dabei aus den Schlitzen 65 zum einen in Ausbuchtungen 55 des Strömungsraums 53 zwischen jeweils zwei Fingern 57 und zum anderen aus den Schlitzen 65 unterhalb der Finger 57 in die Gasleikanäle 66. Über diese gelangt das Gas 38 nach außen weiter weg von der Wanne 63 in den Außenbereich des Membranfilters 36.

Beim seitlichen Durchströmen durch die Schlitze 65 wird eine parallel zur seitlichen Gasströmung gerichtete Flüssigkeitsströmung an der Phasengrenze unterhalb des Gaspolsters erzeugt, die die Innenkante 68 der Rippe 67 anströmt. Aufgrund des Winkels 70 dieser jeweils zwischen zwei Schlitzen 65 gelegenen Innenkante 68 der Wanne 63 können Haare und faserige Verbindungen beim Anströmen der Innenkante 68 abgestreift werden, wodurch die Verblockungsneigung des Membranfilters 36 deutlich reduziert wird.

Nach dem Eintreten des Gases in die zu filtrierende Flüssigkeit 37 wird der Membranträger 41 vom Gas 38 und der Flüssigkeit 37 umströmt, bevor das Gemisch aus Gas 38 und Flüssigkeit 37 die oben im Membranträger 41 befestigten Hohlfasermembranen 43 umströmt. Aufgrund der hohen Scherkraft der Zweiphasenströmung werden die Hohlfasermembranen 43 und der Membranträger 41 außen gespült.

Das Fußelement 39 wird von dem Gas 38 ausgehend vom Gaseinlass 46 durch die Wanne 63, durch die Schlitze 65 und durch den Strömungsraum 53 bis zum Auslass 54 durchströmt. Da der Strömungsraum 53 stets zwischen Mantel 40 und Membranträger 41 liegt und zudem über die Ausbuchtungen 55 auch in den inneren Bereich des Membranfilters 36 hineinragt, wird auf diese Art und Weise eine über den gesamten Querschnitt gleichmäßige Begasung des Membranfilters 36 erreicht unter Vermeidung der Durchströmung von kleinen parallel geschalteten Strömungsräumen. Dadurch wird insgesamt die Verblockungsneigung des Membranfilters 36 im Vergleich zum Stand der Technik reduziert.

Auch der zweite Membranfilter 36 kann im getauchten Betrieb oder trocken aufgestellt betrieben werden.

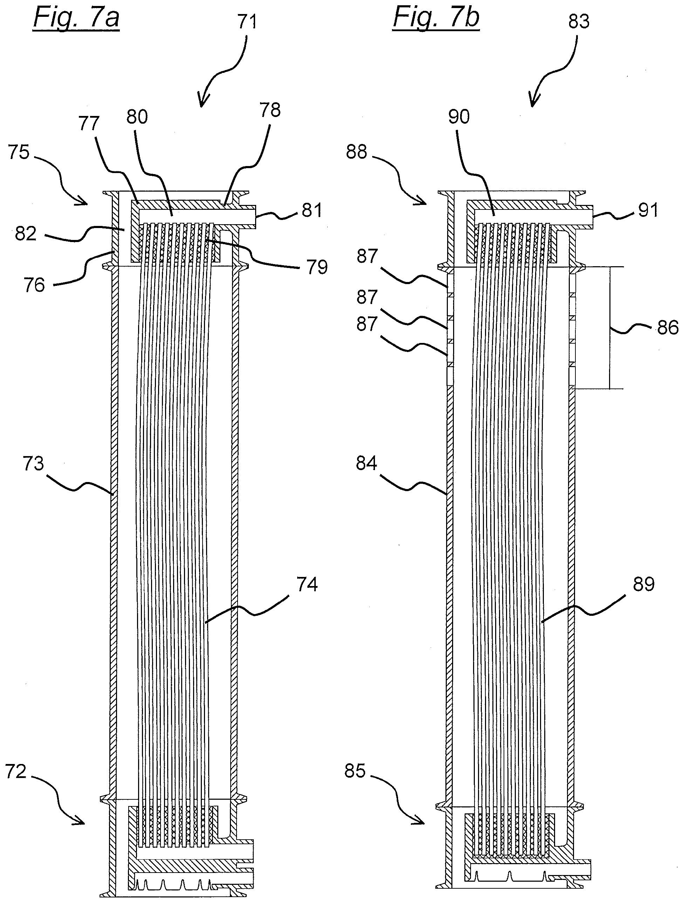

Die Figuren 7a bis 7d zeigen weitere Varianten erfindungsgemäßer Membranfilter mit einem Fußelement und einem Kopfelement.

Figur 7a zeigt einen dritten erfindungsgemäßen Membranfilter 71. Dieser unterscheidet sich von dem ersten Membranfilter 1 dadurch, dass an ein Fußelement 72 oben ein geschlossenes Rohr 73 anschießt, das Hohlfasermembranen 74 umgibt und das oben an ein Kopfelement 75 anschließt. Das Kopfelement 75 hat einen Mantel 76 und einen darin befindlichen Membranträger 77, der mit dem Mantel 76 nur über eine Ankerstelle 78 verbunden ist. Im Kopfelement 75 sind die Hohlfasermembranen 74 oben über eine Harzschicht 79 abdichtend zur zu filtrierenden Flüssigkeit mit ihren Lumen offen eingegossen und befestigt.

Das Kopfelement 75 weist einen Permeatsammelraum 80 auf, der mit den Lumen der Hohlfasermembranen 74 strömungstechnisch verbunden ist, zum Sammeln des Permeates und einen Permeatauslass 81 zum Ablassen des Permeates. Ferner weist das Kopfelement 75 einen zweiten Strömungsraum 82 auf zum Durchströmen des Gases und der zu filtrierenden Flüssigkeit und Ausströmen aus dem Kopfelement 75. Der dritte Membranfilter 71 kann im Tauchbetrieb und im trocken aufgestellten Betrieb eingesetzt werden.

Figur 7b zeigt einen vierten erfindungsgemäßen Membranfilter 83. Dieser unterscheidet sich vom dritten Membranfilter 71 dadurch, dass an ein Rohr 84, das oben an ein Fußelement 85 anschließt, oben zunächst ein Rohraufsatz 86 mit Öffnungen 87 anschließt zum seitlichen Ausströmen eines Teils des Gases und der zu filtrierenden Flüssigkeit aus dem Rohr 84. Der Rohraufsatz 86 und das Rohr 84 bestehen beim vierten Membranfilter 83 aus einem Teil. An den Rohraufsatz 86 schließt oben ein Kopfelement 88 an, das die gleichen Details aufweist wie das Kopfelement 75 des dritten Membranfilters 71. Ein weiterer Unterschied zum dritten Membranfilter 71 bildet das Fußelement 85, das keinen Permeatsammelraum aufweist, d.h. die Hohlfasermembranen 89 sind unten verschlossen im Fußelement 85 eingeharzt und befestigt. Das in den Hohlfasermembranen 89 entstehende Permeat strömt nur in den Permeatsammelraum 90 des Kopfelementes 88, wird dort gesammelt und strömt über einen Permeatauslass 91 aus dem vierten Membranfilter 83. Dieser kann aufgrund der Öffnungen 87 im Rohraufsatz 86 nur im Tauchbetrieb eingesetzt werden.

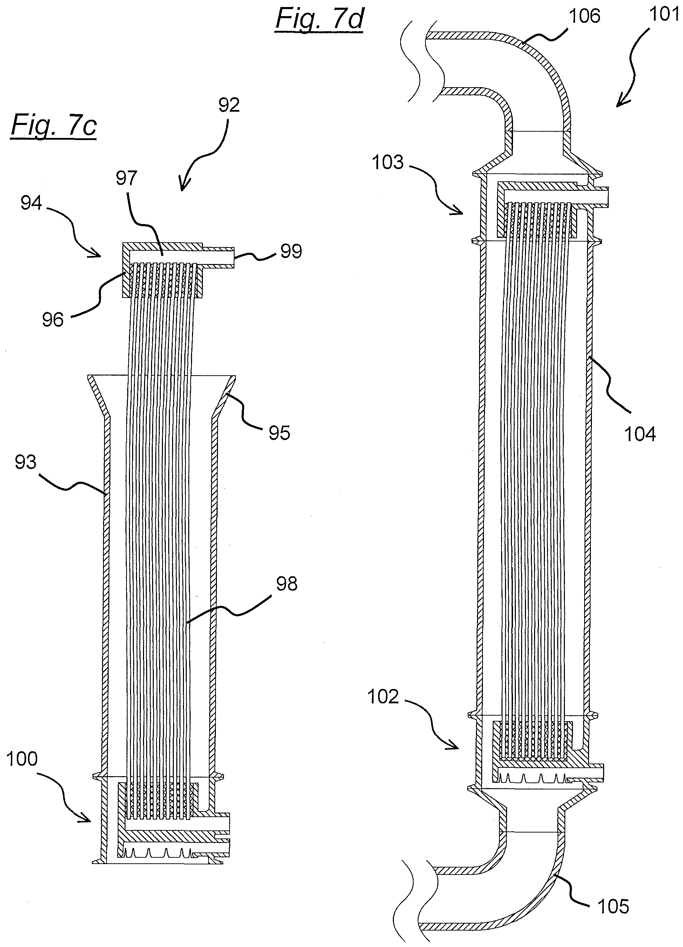

Figur 7c zeigt einen fünften erfindungsgemäßen Membranfilter 92. Dieser unterscheidet sich vom dritten Membranfilter 71 dadurch, dass das Rohr 93 nicht bis zum Kopfelement 94 geführt ist, sondern schon vorher mit einer Rohrerweiterung 95 oben endet. Das Kopfelement 94 ist somit nicht mit dem Rohr 93 verbunden und ist dementsprechend auch nicht durchströmbar für die zu filtrierende Flüssigkeit und das Gas gestaltet. Es weist daher nur einen Membranträger 96 mit darin befestigten, zu einem Permeatsammelraum 97 hin offen eingeharzten Hohlfasermembranen 98 und einen an den Permeatsammelraum 97 anschließenden Permeatauslass 99 auf zum Sammeln und Abführen eines Teils des entstehenden Permeates aus den Hohlfasermembranen 98. Der andere Teil des Permeates wird aus einem zu dem des dritten Membranfilters 71 identischen Fußelement 100 abgeführt. Auch der fünfte Membranfilter 92 kann aufgrund der offenen Gestaltung zwischen dem Rohr 93 und dem Kopfelement 94 nur im Tauchbetrieb eingesetzt werden.

Figur 7d zeigt einen sechsten erfindungsgemäßen Membranfilter 101. Dieser weist ein Fußelement 102 und ein Kopfelement 103 auf, die identisch sind zu denen des vierten Membranfilters 83 und die über ein durchgehend geschlossenes Rohr 104 verbunden sind. Der sechste erfindungsgemäße Membranfilter 101 ist für den trocken aufgestellten Betrieb konzipiert. Dabei wird an das Fußelement 102 eine erste Flüssigkeitsleitung 105 angeschlossen zum Einlassen der zu filtrierenden Flüssigkeit von unten in das Fußelement 102. Weiterhin schließt an das Kopfelement 103 eine zweite Flüssigkeitsleitung 106 oben an zum Auslassen der Flüssigkeit und des Gases aus dem sechsten Membranfilter 101.

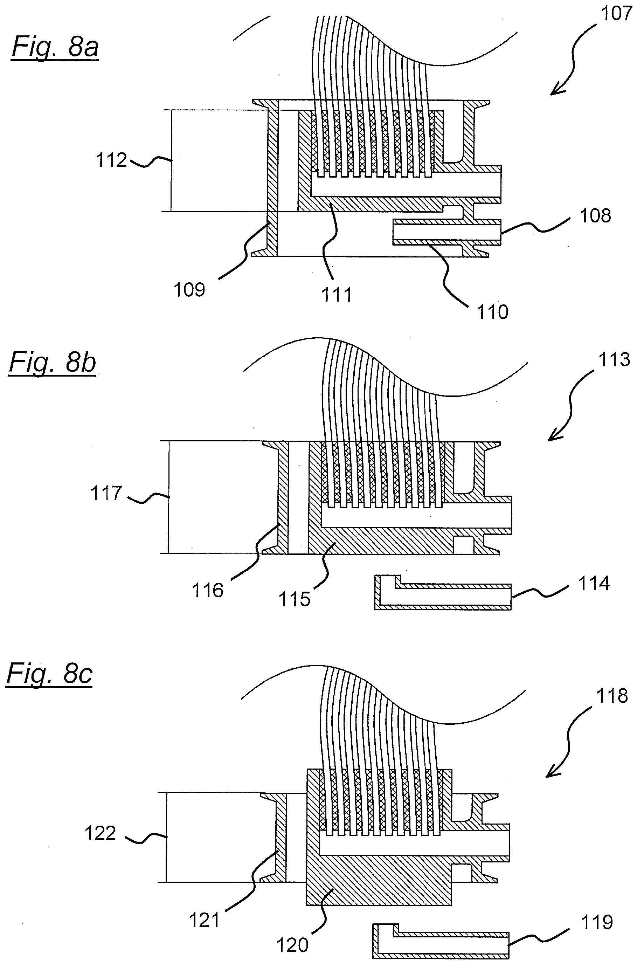

Die Figuren 8a bis 8c zeigen Schnitte durch Fußelemente von drei weiteren erfindungsgemäßen Membranfiltern mit Varianten des Gaseinlasses und der Höhe des Strömungsraums, die aus dem Überschneidungsbereich der Höhen von Mantel und Membranträger gebildet wird.

Figur 8a zeigt einen Schnitt durch ein Fußelement 107 eines siebten erfindungsgemäßen Membranfilters, bei dem das Fußelement 107 einen Gaseinlass 108 aufweist und dieser auf einer Innenseite des Mantels 109 als Rohrstutzen 110 bis zur Mitte des Fußelementes 107 weitergeführt wird, wo das Gas zentral unterhalb eines Membranträgers 111 ausströmt und diesen anschließend umströmt. Der Mantel 109 des Fußelementes 107 ragt oben und unten über den Membranträger 111 hinaus, so dass die durch den Überschneidungsbereich der Höhen von Mantel 109 und Membranträger 111 definierte Höhe 112 des Strömungsraums in diesem Fall mit der Höhe des Membranträgers 111 identisch ist.

Figur 8b zeigt einen Schnitt durch das Fußelement 113 eines achten erfindungsgemäßen Membranfilters, bei dem das Fußelement 113 nicht den Gaseinlass 114 aufweist. Das Gas wird hier separat vom Fußelement 113 von unten zentral unterhalb des Membranträgers 115 über den Gaseinlass 114 zuführt und umströmt anschließend den Membranträger 115. Die Abmessungen des Mantels 116 des Fußelementes 113 sind oben und unten bündig mit denen des Membranträgers 115, so dass die Höhe 117 des Strömungsraums in diesem Fall mit der Höhe des Membranträgers 115 und der Höhe des Mantels 116 übereinstimmt.

Figur 8c zeigt einen Schnitt durch das Fußelement 118 eines neunten erfindungsgemäßen Membranfilters, bei dem der Gaseinlass 119 identisch ist mit dem des achten erfindungsgemäßen Membranfilters. Der Membranträger 120 des Fußelementes 118 ragt oben und unten über den Mantel 121 hinaus, so dass die durch den Überschneidungsbereich der Höhen von Membranträger 120 und Mantel 121 definierte Höhe 122 des Strömungsraums in diesem Fall mit der Höhe des Mantels 121 identisch ist.

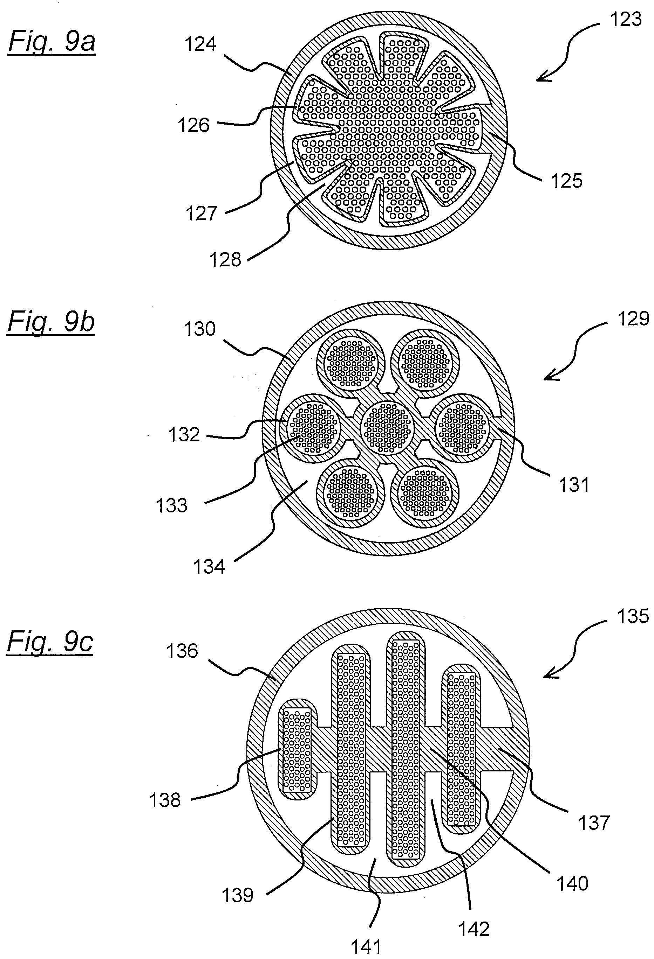

Die Figuren 9a bis 9c zeigen Varianten der Form des Membranträgers in weiteren erfindungsgemäßen Membranfiltern. Diese Varianten können in allen zuvor gezeigten erfindungsgemäßen Membranfiltern realisiert werden.

Figur 9a zeigt ein Fußelement 123 eines zehnten erfindungsgemäßen Membranfilters, das einen Mantel 124 aufweist mit einem darin befindlichen, nur über eine Ankerstelle 125 mit dem Mantel 124 verbundenen Membranträger 126. Zwischen dem Mantel 124 und dem Membranträger 126 befindet sich ein Strömungsraum 127 mit Ausbuchtungen 128 in den Membranträger 126 hinein. Der Membranträger 126 verschließt das Fußelement 123 bis auf den einen Strömungsraum 127 vollständig für die Durchströmung des Gases und der zu filtrierenden Flüssigkeit.

Figur 9b zeigt ein Fußelement 129 eines elften erfindungsgemäßen Membranfilters, das einen Mantel 130 aufweist mit einem darin befindlichen, nur über eine Ankerstelle 131 mit dem Mantel 130 verbundenen Membranträger 132. Der Membranträger 132 enthält 7 Membranbündel 133, von denen sechs ähnlich einer Blütenstruktur um ein zentrales Membranbündel 133 angeordnet sind. Zwischen dem Mantel 130 und dem Membranträger 132 befindet sich ein Strömungsraum 134. Der Membranträger 132 verschließt das Fußelement 129 bis auf den einen Strömungsraum 134 vollständig für die Durchströmung des Gases und der zu filtrierenden Flüssigkeit.

Figur 9c zeigt ein Fußelement 135 eines zwölften erfindungsgemäßen Membranfilters, das einen Mantel 136 aufweist mit einem darin befindlichen, nur über eine Ankerstelle 137 mit dem Mantel 136 verbundenen Membranträger 138, der 4 Finger 139 aufweist, die über einen Anker 140 miteinander verbunden und an der Ankerstelle 137 befestigt sind. Zwischen dem Mantel 136 und dem Membranträger 138 befindet sich ein Strömungsraum 141 mit Ausbuchtungen 142 in den Membranträger 138 hinein, die bis zum Anker 140 führen. Der Membranträger 138 verschließt das Fußelement 135 bis auf den einen Strömungsraum 141 vollständig für die Durchströmung des Gases und der zu filtrierenden Flüssigkeit.

In den Figuren sind
- 1: Membranfilter
- 2: Fußelement
- 3: Mantel
- 4: Membranträger
- 5: Hohlfasermembran
- 6: Rohr
- 7: oberes Ende
- 8: Länge
- 9: Harzschicht
- 10: Höhe Membranfilter
- 11: Höhe Fußelement
- 12: Höhe Membranträger
- 13: Gaseinlass
- 14: Permeatauslass
- 15: Ankerstelle
- 16: Strömungsraum
- 17: Auslass
- 18: Gasverteilsystem
- 19: Wanne
- 20: Wandung
- 21: vertikaler Schlitz
- 22: Innenkante
- 23: untere Hälfte
- 24: Winkel
- 25: Permeatsammelraum
- 26: Gas
- 27: Gaspolster
- 28: zu filtrierende Flüssigkeit
- 29: Permeat
- 30: Flüssigkeitsüberstand
- 31: Gaszuführleitung
- 32: Drossel
- 33: Permeatleitung
- 34: erste Flüssigkeitsleitung
- 35: zweite Flüssigkeitsleitung
- 36: Membranfilter
- 37: zu filtrierende Flüssigkeit
- 38: Gas
- 39: Fußelement
- 40: Mantel
- 41: Membranträger
- 42: Ankerstelle
- 43: Hohlfasermembran
- 44: Permeat
- 45: Rohr
- 46: Gaseinlass
- 47: Permeatsammelraum
- 48: Permeatauslass
- 49: Höhe
- 50: Höhe
- 51: Harzschicht
- 52: oberes Ende
- 53: Strömungsraum
- 54: Auslass
- 55: Ausbuchtung
- 56: Anker
- 57: Finger
- 58: Strömungskanal
- 59: Breite
- 60: Durchmesser
- 61: Höhe
- 62: Gasverteilsystem
- 63: Wanne
- 64: Wandung
- 65: Schlitz
- 66: Gasleitkanal
- 67: Rippe
- 68: Innenkante
- 69: Hälfte
- 70: Winkel
- 71: Membranfilter
- 72: Fußelement
- 73: Rohr
- 74: Hohlfasermembran
- 75: Kopfelement
- 76: Mantel
- 77: Membranträger
- 78: Ankerstelle
- 79: Harzschicht
- 80: Permeatsammelraum
- 81: Permeatauslass
- 82: Strömungsraum
- 83: Membranfilter
- 84: Rohr
- 85: Fußelement
- 86: Rohraufsatz
- 87: Öffnung
- 88: Kopfelement
- 89: Hohlfasermembran
- 90: Permeatsammelraum
- 91: Permeatauslass
- 92: Membranfilter
- 93: Rohr
- 94: Kopfelement
- 95: Rohrerweiterung
- 96: Membranträger
- 97: Permeatsammelraum
- 98: Hohlfasermembran
- 99: Permeatauslass
- 100: Fußelement
- 101: Membranfilter
- 102: Fußelement
- 103: Kopfelement
- 104: Rohr
- 105: erste Flüssigkeitsleitung
- 106: zweite Flüssigkeitsleitung
- 107: Fußelement
- 108: Gaseinlass
- 109: Mantel
- 110: Rohrstutzen
- 111: Membranträger
- 112: Höhe
- 113: Fußelement
- 114: Gaseinlass
- 115: Membranträger
- 116: Mantel
- 117: Höhe des Strömungsraums
- 118: Fußelement
- 119: Gaseinlass
- 120: Membranträger
- 121: Mantel
- 122: Höhe des Strömungsraums
- 123: Fußelement
- 124: Mantel
- 125: Ankerstelle
- 126: Membranträger
- 127: Strömungsraum
- 128: Ausbuchtung
- 129: Fußelement
- 130: Mantel
- 131: Ankerstelle
- 132: Membranträger
- 133: Membranbündel
- 134: Strömungsraum
- 135: Fußelement
- 136: Mantel
- 137: Ankerstelle
- 138: Membranträger
- 139: Finger
- 140: Anker
- 141: Strömungsraum
- 142: Ausbuchtung

## Patentansprüche

1. Membranfilter (36 ,71, 83, 92, 101) zum Filtern einer zu filtrierenden Flüssigkeit (37) mit
a. einem nach unten offenen, von einem Gas (38) und der Flüssigkeit (37) durchströmbaren Fußelement (39, 72, 85, 100, 102, 107, 113, 118, 123, 129, 135), das einen rohrförmigen Mantel (40, 76, 109, 116, 121, 124, 130, 136) und genau einen darin befindlichen Membranträger (41, 77, 96, 111, 115, 120, 126, 132, 138) aufweist, wobei der Membranträger (41, 77, 96, 111, 115, 120, 126, 132, 138) mit dem Mantel (40, 76, 109, 116, 121, 124, 130, 136) über mindestens eine Ankerstelle (42, 78, 125, 131, 137) verbunden ist,
b. oben in dem Membranträger (41, 77, 96, 111, 115, 120, 126, 132, 138) befestigten Hohlfasermembranen (43, 74, 89, 98) mit jeweils einem Lumen, in das ein flüssiges Permeat (44) aus der Flüssigkeit (37) filtrierbar ist,
c. einem im Umfang geschlossenen Rohr (45, 73, 84, 93, 104), das an den Mantel (40, 76, 109, 116, 121, 124, 130, 136) oben anschließend die Hohlfasermembranen (43, 74, 89, 98) umgibt,
d. einem Gaseinlass (46, 108, 114, 119) zum Einlassen des Gases (38) in das Fußelement (39, 72, 85, 100, 102, 107, 113, 118, 123, 129, 135),
e. mindestens einem Permeatsammelraum (47, 80, 90, 97), der mit den Lumen der Hohlfasermembranen (43, 74, 89, 98) verbunden ist zum Sammeln des Permeats (44) aus den Hohlfasermembranen (43, 74, 89, 98),
f. mindestens einem Permeatauslass (48, 81, 91, 99) zum Ablassen des Permeats (44) aus dem mindestens einen Permeatsammelraum (47, 80, 90, 97) und
g. mindestens einem nach unten offenen Strömungsraum (53, 82, 127, 134, 141) zwischen dem Mantel (40, 76, 109, 116, 121, 124, 130, 136) und dem Membranträger (41, 77, 96, 111, 115, 120, 126, 132, 138) zum Durchströmen der Flüssigkeit (37), der oben einen Auslass (54) aufweist zum Auslassen der Flüssigkeit (37) in das Rohr (45, 73, 84, 93, 104), wobei der mindestens eine Strömungsraum (53, 82, 127, 134, 141) in jedem horizontalen Schnitt durch den Membranträger (41, 77, 96, 111, 115, 120, 126, 132, 138) sowohl an den Mantel (40, 76, 109, 116, 121, 124, 130, 136) als auch an den Membranträger (41, 77, 96, 111, 115, 120, 126, 132, 138) grenzt und als Ringspalt den Membranträger (41, 77, 96, 111, 115, 120, 126, 132, 138) umgibt, der nur durch die mindestens eine Ankerstelle (42, 78, 125, 131, 137) unterbrochen wird, wobei eine Höhe (112, 117, 122) des Strömungsraums (53, 82, 127, 134, 141) durch einen Überschneidungsbereich einer Höhe (12, 61) des Membranträgers (41, 77, 96, 111, 115, 120, 126, 132, 138) und einer Höhe des Mantels (40, 76, 109, 116, 121, 124, 130, 136) definiert ist, und wobei der Membranträger (41, 77, 96, 111, 115, 120, 126, 132, 138) das Fußelement (39, 72, 85, 100, 102, 107, 113, 118, 123, 129, 135) bis auf den mindestens einen Strömungsraum (53, 82, 127, 134, 141) für die Durchströmung der Flüssigkeit (37) von unten nach oben vollständig verschließt,
h. wobei das Fußelement (39, 72, 85, 100, 102, 107, 113, 118, 123, 129, 135) in Folge vom Gaseinlass (46, 108, 114, 119) durch den mindestens einen Strömungsraum (53, 82, 127, 134, 141) bis zum Auslass (17, 54) durchströmbar ist, **dadurch gekennzeichnet, dass**
i. der mindestens eine Strömungsraum (53, 82, 127, 134, 141) in den Membranträger (41, 77, 96, 111, 115, 120, 126, 132, 138) hineinragende Ausbuchtungen (55, 128, 142) aufweist.

2. Membranfilter (36 ,71, 83, 92, 101) nach dem vorgenannten Anspruch, **dadurch gekennzeichnet, dass** der Membranträger (41, 77, 96, 111, 115, 120, 126, 132, 138) Finger (57, 139) aufweist, die durch die Ausbuchtungen (55, 128, 142) ausgebildet werden und die über einen Anker (56, 140) des Membranträgers (41, 77, 96, 111, 115, 120, 126, 132, 138) verbunden sind.

3. Membranfilter (36 ,71, 83, 92, 101) nach einem der vorhergehenden Ansprüche, **dadurch gekennzeichnet, dass** der Membranträger (41, 77, 96, 111, 115, 120, 126, 132, 138) über maximal zwei Ankerstellen (42, 78, 125, 131, 137) mit dem Mantel (40, 76, 109, 116, 121, 124, 130, 136) verbunden ist, die in Verlängerung des Ankers (56, 140) stehen.

4. Membranfilter (36 ,71, 83, 92, 101) nach einem der vorhergehenden Ansprüche, **dadurch gekennzeichnet, dass** der Membranträger (41, 77, 96, 111, 115, 120, 126, 132, 138) in jedem der horizontalen Schnitte oberhalb der mindestens einen Ankerstelle (56, 140) vollständig vom Mantel (40, 76, 109, 116, 121, 124, 130, 136) getrennt ist.

5. Membranfilter (36 ,71, 83, 92, 101) nach einem der vorhergehenden Ansprüche, **dadurch gekennzeichnet, dass** der mindestens eine Strömungsraum (53, 82, 127, 134, 141) in mindestens einem der horizontalen Schnitte mindestens einen Strömungskanal (58) ausbildet, der über mehr als 80 % seiner Länge eine einheitliche Breite aufweist.

6. Membranfilter (36 ,71, 83, 92, 101) nach einem der vorhergehenden Ansprüche, **dadurch gekennzeichnet, dass** der Membranträger (41, 77, 96, 111, 115, 120, 126, 132, 138) in den horizontalen Schnitten einen sich nach unten verringernden Querschnitt aufweist.

7. Membranfilter (36 ,71, 83, 92, 101) nach einem der vorgenannten Ansprüche, **dadurch gekennzeichnet, dass** das Fußelement (39, 72, 85, 100, 102, 107, 113, 118, 123, 129, 135) den Gaseinlass (46, 108, 114, 119) aufweist zum Einlassen des Gases (38) in das Fußelement (39, 72, 85, 100, 102, 107, 113, 118, 123, 129, 135).

8. Verfahren zum Filtern einer Flüssigkeit (37) in einem Membranfilter (36, 71, 83, 92, 101), wobei der Membranfilter (36 ,71, 83, 92, 101) ein Fußelement (39, 72, 85, 100, 102, 107, 113, 118, 123, 129, 135), ein im Umfang geschlossenes Rohr (45, 73, 84, 93, 104) und einen Gaseinlass (46, 108, 114, 119) aufweist, wobei das Fußelement (39, 72, 85, 100, 102, 107, 113, 118, 123, 129, 135) einen rohrförmigen Mantel (40, 76, 109, 116, 121, 124, 130, 136) und genau einen darin befindlichen, mit dem Mantel (40, 76, 109, 116, 121, 124, 130, 136) über mindestens eine Ankerstelle (42, 78, 125, 131, 137) verbundenen Membranträger (41, 77, 96, 111, 115, 120, 126, 132, 138) aufweist, in dem oben Hohlfasermembranen (43, 74, 89, 98) befestigt sind, wobei das Rohr (45, 73, 84, 93, 104) sich oben an den Mantel (40, 76, 109, 116, 121, 124, 130, 136) anschließt, wobei das Fußelement (39, 72, 85, 100, 102, 107, 113, 118, 123, 129, 135) zwischen Mantel (40, 76, 109, 116, 121, 124, 130, 136) und Membranträger (41, 77, 96, 111, 115, 120, 126, 132, 138) mindestens einen Strömungsraum (53, 82, 127, 134, 141) aufweist, der oben einen Auslass (54) aus dem Fußelement (39, 72, 85, 100, 102, 107, 113, 118, 123, 129, 135) in das Rohr (45, 73, 84, 93, 104) aufweist, wobei der mindestens eine Strömungsraum (53, 82, 127, 134, 141) in jedem horizontalen Schnitt durch den Membranträger (41, 77, 96, 111, 115, 120, 126, 132, 138) sowohl an den Mantel (40, 76, 109, 116, 121, 124, 130, 136) als auch an den Membranträger (41, 77, 96, 111, 115, 120, 126, 132, 138) grenzt und als Ringspalt den Membranträger (41, 77, 96, 111, 115, 120, 126, 132, 138) umgibt, der nur durch die mindestens eine Ankerstelle (42, 78, 125, 131, 137) unterbrochen wird, wobei eine Höhe (112, 117, 122) des Strömungsraums (53, 82, 127, 134, 141) durch einen Überschneidungsbereich einer Höhe (12, 61) des Membranträgers (41, 77, 96, 111, 115, 120, 126, 132, 138) und einer Höhe des Mantels (40, 76, 109, 116, 121, 124, 130, 136) definiert ist, und wobei der Membranträger (41, 77, 96, 111, 115, 120, 126, 132, 138) das Fußelement (39, 72, 85, 100, 102, 107, 113, 118, 123, 129, 135) bis auf den mindestens einen Strömungsraum (53, 82, 127, 134, 141) vollständig für die Durchströmung der Flüssigkeit (37) von unten nach oben verschließt, und wobei
a. die Flüssigkeit (37) in das Fußelement (39, 72, 85, 100, 102, 107, 113, 118, 123, 129, 135) einströmt, den mindestens einen Strömungsraum (53, 82, 127, 134, 141) durchströmt und dabei den Membranträger (41, 77, 96, 111, 115, 120, 126, 132, 138) umströmt,
b. ein Gas (38) durch den Gaseinlass (46, 108, 114, 119) in das Fußelement (39, 72, 85, 100, 102, 107, 113, 118, 123, 129, 135) einströmt,
c. die Flüssigkeit (37) nur durch den Auslass (54) oben am Fußelement (39, 72, 85, 100, 102, 107, 113, 118, 123, 129, 135) ausströmt und nur durch diesen in das Rohr (45, 73, 84, 93, 104) einströmt,
d. das Gas (38) oben am Fußelement (39, 72, 85, 100, 102, 107, 113, 118, 123, 129, 135) ausströmt, in das Rohr (45, 73, 84, 93, 104) einströmt und in dem Rohr (45, 73, 84, 93, 104) aufsteigt und dadurch eine Aufwärtsbewegung der Flüssigkeit (37) in dem Membranfilter (36 ,71, 83, 92, 101) generiert,
e. die aufsteigende Flüssigkeit (37) und das Gas (38) die Hohlfasermembranen (43, 74, 89, 98) außen spülen,
f. zwischen einer Außenseite der Hohlfasermembranen (43, 74, 89, 98) und Lumen der Hohlfasermembranen (43, 74, 89, 98) eine Druckdifferenz anliegt, aufgrund derer ein flüssiges Permeat (44) aus der Flüssigkeit (37) filtriert wird und in die Lumen der Hohlfasermembranen (43, 74, 89, 98) strömt,
g. das Permeat (44) aus den Lumen gesammelt wird und aus dem Membranfilter (36 ,71, 83, 92, 101) ausströmt,
h. das Gas (38) durch den Gaseinlass (46, 108, 114, 119) in den mindestens einen Strömungsraum (53, 82, 127, 134, 141) einströmt, und anschließend
i. das Gas (38) gemeinsam mit der Flüssigkeit (37) das Fußelement (39, 72, 85, 100, 102, 107, 113, 118, 123, 129, 135) in dem mindestens einen Strömungsraum (53, 82, 127, 134, 141) zwischen dem Mantel (40, 76, 109, 116, 121, 124, 130,136) und dem Membranträger (41, 77, 96, 111, 115, 120, 126, 132, 138) durchströmt und durch den Auslass (54) in das Rohr (45, 73, 84, 93, 104) einströmt,
j. wobei der mindestens eine Strömungsraum (53, 82, 127, 134, 141) in den Membranträger (41, 77, 96, 111, 115, 120, 126, 132, 138) hineinragende Ausbuchtungen (55, 128, 142) aufweist.

9. Verfahren nach Anspruch 8, **dadurch gekennzeichnet, dass** die Flüssigkeit (37) und das Gas (38) den Membranträger (41, 77, 96, 111, 115, 120, 126, 132, 138) in mindestens einem der horizontalen Schnitte durch den Membranträger (41, 77, 96, 111, 115, 120, 126, 132, 138) vollständig umströmen.

10. Verfahren nach einem der Ansprüche 8 oder 9, **dadurch gekennzeichnet, dass** der Membranfilter (36 , 71, 83, 92, 101) in die Flüssigkeit (37) getaucht ist.

11. Verfahren nach einem der Ansprüche 9 oder 10, **dadurch gekennzeichnet, dass** die Flüssigkeit (37) mittels einer ersten Flüssigkeitsleitung (105) dem Fußelement (39, 72, 85, 100, 102, 107, 113, 118, 123, 129, 135) zugeführt und mittels einer zweiten Flüssigkeitsleitung (106) oben aus dem Membranfilter (36 ,71, 83, 92, 101) abgeführt wird.

## Claims

1. A membrane filter (36, 71, 83, 92, 101) for filtering a liquid (37) to be filtered, having
a. a downwardly open base element (39, 72, 85, 100, 102, 107, 113, 118, 123, 129, 135) through which a gas (38) and the liquid (37) can pass, which has a tubular shell (40, 76, 109, 116, 121, 124, 130, 136) and exactly one membrane carrier (41, 77, 96, 111, 115, 120, 126, 132, 138) situated therein, wherein the membrane carrier (41, 77, 96, 111, 115, 120, 126, 132, 138) is connected to the shell (40, 76, 109, 116, 121, 124, 130, 136) by way of at least one anchoring point (42, 78, 125, 131, 137),
b. hollow-fibre membranes (43, 74, 89, 98) fastened at the top in the membrane carrier (41, 77, 96, 111, 115, 120, 126, 132, 138), each having a lumen in which a liquid permeate (44) can be filtered out of the fluid (37),
c. a circumferentially closed pipe (45, 73, 84, 93, 104), which, adjoining the top of the shell (40, 76, 109, 116, 121, 124, 130, 136), surrounds the hollow fibre membranes (43, 74, 89, 98),
d. a gas inlet (46, 108, 114, 119) for injecting the gas (38) into the base element (39, 72, 85, 100, 102, 107, 113, 118, 123, 129, 135),
e. at least one permeate collection chamber (47, 80, 90, 97), which is connected to the lumens of the hollow-fibre membranes (43, 74, 89, 98) for collecting the permeate (44) from the hollow-fibre membranes (43, 74, 89, 98),
f. at least one permeate outlet (48, 81, 91, 99) for allowing the permeate (44) to discharge from the at least one permeate collection chamber (47, 80, 90, 97) and
g. at least one downwardly open flow chamber (53, 82, 127, 134, 141) between the shell (40, 76, 109, 116, 121, 124, 130, 136) and the membrane carrier (41, 77, 96, 111, 115, 120, 126, 132, 138) for allowing the fluid (37) to pass through, which has an outlet (54) at the top for discharging the fluid (37) into the tube (45, 73, 84, 93, 104), wherein the at least one flow chamber (53, 82, 127, 134, 141) in each horizontal section through the membrane carrier (41, 77, 96, 111, 115, 120, 126, 132, 138) adjoins both the shell (40, 76, 109, 116, 121, 124, 130, 136) and the membrane carrier (41, 77, 96, 111, 115, 120, 126, 132, 138) and surrounds the membrane carrier (41, 77, 96, 111, 115, 120, 126, 132, 138) as an annular gap, which is only interrupted by at least one anchoring point (42, 78, 125, 131, 137), wherein a height (112, 117, 122) of the flow chamber (53, 82, 127, 134, 141) is defined by an area of overlap of a height (12, 61) of the membrane carrier (41, 77, 96, 111, 115, 120, 126, 132, 138) with a height of the sheath (40, 76, 109, 116, 121, 124, 130, 136), and wherein the membrane carrier (41, 77, 96, 111, 115, 120, 126, 132, 138) completely closes off the base element (39, 72, 85, 100, 102, 107, 113, 118, 123, 129, 135) except for the at least one flow chamber (53, 82, 127, 134, 141) for the through flow of the liquid (37) from the bottom to the top,
h. wherein as a result of the gas inlet (46, 108, 114, 119) the base element (39, 72, 85, 100, 102, 107, 113, 118, 123, 129, 135) can be permeated through the at least one flow chamber (53, 82, 127, 134, 141) to the outlet (17, 54), **characterized in that**
i. the at least one flow chamber (53, 82, 127, 134, 141) comprises convexities (55, 128, 142) that protrude into the membrane carrier (41, 77, 96, 111, 115, 120, 126, 132, 138).

2. The membrane filter (36, 71, 83, 92, 101) according to the previous claim, **characterized in that** the membrane carrier (41, 77, 96, 111, 115, 120, 126, 132, 138) has fingers (57, 139), which are formed by the convexities (55, 128, 142) and are connected by way of an anchor (56, 140) of the membrane carrier (41, 77, 96, 111, 115, 120, 126, 132, 138).

3. The membrane filter (36, 71, 83, 92, 101) according to any one of the previous claims, **characterized in that** the membrane carrier (41, 77, 96, 111, 115, 120, 126, 132, 138) is connected to the shell (40, 76, 109, 116, 121, 124, 130, 136) by way of a maximum of two anchoring points (42, 78, 125, 131, 137) which are located on the extension of the anchor (56, 140).

4. The membrane filter (36, 71, 83, 92, 101) according to any one of the previous claims, **characterized in that** the membrane carrier (41, 77, 96, 111, 115, 120, 126, 132, 138) is completely separated from the shell (40, 76, 109, 116, 121, 124, 130, 136) in each of the horizontal sections above the at least one anchoring point (56, 140).

5. The membrane filter (36, 71, 83, 92, 101) according to any one of the previous claims, **characterized in that** in at least one of the horizontal sections the at least one flow chamber (53, 82, 127, 134, 141) forms at least one flow channel (58), which has a uniform width over more than 80% of its length.

6. The membrane filter (36, 71, 83, 92, 101) according to any one of the previous claims, **characterized in that** the membrane carrier (41, 77, 96, 111, 115, 120, 126, 132, 138) has a cross-section in the horizontal sections that reduces towards the bottom.

7. The membrane filter (36, 71, 83, 92, 101) according to any one of the previous claims, **characterized in that** the base element (39, 72, 85, 100, 102, 107, 113, 118, 123, 129, 135) comprises the gas inlet (46, 108, 114, 119) for injecting the gas (38) into the base element (39, 72, 85, 100, 102, 107, 113, 118, 123, 129, 135).

8. A method for filtering a liquid (37) in a membrane filter (36, 71, 83, 92, 101), wherein the membrane filter (36, 71, 83, 92, 101) comprises a base element (39, 72, 85, 100, 102, 107, 113, 118, 123, 129, 135), a circumferentially closed pipe (45, 73, 84, 93, 104) and a gas inlet (46, 108, 114, 119), wherein the base element (39, 72, 85, 100, 102, 107, 113, 118, 123, 129, 135) has a tubular shell (40, 76, 109, 116, 121, 124, 130, 136) and exactly one membrane carrier (41, 77, 96, 111, 115, 120, 126, 132, 138) situated therein, which is connected to the shell (40, 76, 109, 116, 121, 124, 130, 136) by way of at least one anchoring point (42, 78, 125, 131, 137), and in said membrane carrier (41, 77, 96, 111, 115, 120, 126, 132, 138) hollow-fibre membranes (43, 74, 89, 98) are attached at the top, wherein the pipe (45, 73, 84, 93, 104) is joined to the top of the shell (40, 76, 109, 116, 121, 124, 130, 136), wherein between the shell (40, 76, 109, 116, 121, 130, 136) and membrane carrier (41, 77, 96, 111, 115, 120, 126, 132, 138) the base element (39, 72, 85, 100, 102, 107, 113, 118, 123, 129, 135) has at least one flow chamber (53, 82, 127, 134, 141), which has an outlet (54) at the top for discharging the fluid (37) into the tube (45, 73, 84, 93, 104), wherein the at least one flow chamber (53, 82, 127, 134, 141) in each horizontal section through the membrane carrier (41, 77, 96, 111, 115, 120, 126, 132, 138) adjoins both the shell (40, 76, 109, 116, 121, 124, 130, 136) and the membrane carrier (41, 77, 96, 111, 115, 120, 126, 132, 138) and surrounds the membrane carrier (41, 77, 96, 111, 115, 120, 126, 132, 138) as an annular gap, which is only interrupted by at least one anchoring point (42, 78, 125, 131, 137), wherein a height (112, 117, 122) of the flow chamber (53, 82, 127, 134, 141) is defined by an area of overlap of a height (12, 61) of the membrane carrier (41, 77, 96, 111, 115, 120, 126, 132, 138) with a height of the sheath (40, 76, 109, 116, 121, 124, 130, 136), and wherein the membrane carrier (41, 77, 96, 111, 115, 120, 126, 132, 138) completely closes off the base element (39, 72, 85, 100, 102, 107, 113, 118, 123, 129, 135) except for the at least one flow chamber (53, 82, 127, 134, 141) for the through flow of the liquid (37) from the bottom to the top, and wherein
a. the liquid (37) flows into the base element (39, 72, 85, 100, 102, 107, 113, 118, 123, 129, 135), flows through the at least one flow chamber (53, 82, 127, 134, 141) and in doing so flows around the membrane carrier (41, 77, 96, 111, 115, 120, 126, 132, 138),
b. a gas (38) flows through the gas inlet (46, 108, 114, 119) into the base element (39, 72, 85, 100, 102, 107, 113, 118, 123, 129, 135)
c. the liquid (37) flows out only through the outlet (54) at the top of the base element (39, 72, 85, 100, 102, 107, 113, 118, 123, 129, 135) and only flows through this into the pipe (45, 73, 84, 93, 104),
d. the gas (38) flows out at the top of the base element (39, 72, 85, 100, 102, 107, 113, 118, 123, 129, 135), flows into the pipe (45, 73, 84, 93, 104) and rises in the pipe (45, 73, 84, 93, 104), thereby generating an upward movement of the liquid (37) in the membrane filter (36, 71, 83, 92, 101),
e. the rising liquid (37) and the gas (38) flush the hollow-fibre membranes (43, 74, 89, 98) externally,
f. a pressure difference exists between an outer side of the hollow-fibre membranes (43, 74, 89, 98) and lumens of the hollow-fibre membranes (43, 74, 89, 98), as a result of which a liquid permeate (44) is filtered out of the fluid (37) and flows into the lumens of the hollow-fibre membranes (43, 74, 89, 98),
g. the permeate (44) is collected from the lumens and flows out of the membrane filter (36, 71, 83, 92, 101),
h. the gas (38) flows through the gas inlet (46, 108, 114, 119) into the at least one flow chamber (53, 82, 127, 134, 141), and then
i. the gas (38) flows through the base element (39, 72, 85, 100, 102, 107, 113, 118, 123, 129, 135) together with the liquid (37) in the at least one flow chamber (53, 82, 127, 134, 141) between the shell (40, 76, 109, 116, 121, 124, 130, 136) and the membrane carrier (41, 77, 96, 111, 115, 120, 126, 132, 138) and flows through the outlet (54) into the pipe (45, 73, 84, 93, 104),
j. wherein the at least one flow chamber (53, 82, 127, 134, 141) comprises convexities (55, 128, 142) that protrude into the membrane carrier (41, 77, 96, 111, 115, 120, 126, 132, 138).

9. The method according to claim 8, **characterized in that** the fluid (37) and the gas (38) flow completely around the membrane carrier (41, 77, 96, 111, 115, 120, 126, 132, 138) in at least one of the horizontal sections through the membrane carrier (41, 77, 96, 111, 115, 120, 126, 132, 138).

10. The method according to any one of claims 8 or 9, **characterized in that** the membrane filter (36, 71, 83, 92, 101) is immersed in the liquid (37).

11. The method according to any one of claims 9 or 10, **characterized in that** the fluid (37) is fed to the base element (39, 72, 85, 100, 102, 107, 113, 118, 123, 129, 135) by means of a first fluid line (105) and is discharged from the top of the membrane filter (36, 71, 83, 92, 101) by means of a second fluid line (106).

## Revendications

1. Filtre à membrane (36, 71, 83, 92, 101) pour le filtrage d'un liquide à filtrer (37), avec
a. un élément bas (39, 72, 85, 100, 102, 107, 113, 118, 123, 129, 135) ouvert sur le dessous, susceptible d'être traversé par un gaz (38) et par le liquide (37), qui comporte une enveloppe de forme tubulaire (40, 76, 109, 116, 121, 124, 130, 136) et exactement un porte-membrane (41, 77, 96, 111, 115, 120, 126, 132, 138) se trouvant dans cette dernière, le porte-membrane (41, 77, 96, 111, 115, 120, 126, 132, 138) étant relié avec l'enveloppe (40, 76, 109, 116, 121, 124, 130, 136) par l'intermédiaire d'au moins un point d'ancrage (42, 78, 125, 131, 137),
b. des membranes à fibres creuses (43, 74, 89, 98) fixées en haut dans le porte-membrane (41, 77, 96, 111, 115, 120, 126, 132, 138) avec chacune une lumière, dans laquelle un perméat liquide (44) est susceptible d'être filtré hors du liquide (37),
c. un tube (45, 73, 84, 93, 104) fermé sur sa périphérie, qui en se raccordant en haut sur l'enveloppe (40, 76, 109, 116, 121, 124, 130, 136), entoure la membrane à fibres creuses (43, 74, 89, 98),
d. une entrée de gaz (46, 108, 114, 119) pour laisser rentrer le gaz (38) dans l'élément bas (39, 72, 85, 100, 102, 107, 113, 118, 123, 129, 135),
e. au moins un espace collecteur du perméat liquide (47, 80, 90, 97), qui est relié avec la lumière des membranes à fibres creuses (43, 74, 89, 98) pour collecter le perméat liquide (44) hors des membranes à fibres creuses (43, 74, 89, 98),
f. au moins une sortie de perméat liquide (48, 81, 91, 99) pour évacuer le perméat liquides (44) hors de l'au moins un espace collecteur du perméat liquide (47, 80, 90, 97) et
g. au moins un espace de circulation (53, 82, 127, 134, 141) ouvert sur le dessous, entre l'enveloppe (40, 76, 109, 116, 121, 124, 130, 136) et le porte-membrane (41, 77, 96, 111, 115, 120, 126, 132, 138) pour traverser le liquide (37), qui comporte sur le haut une sortie (54) pour évacuer le liquide (37) dans le tube (45, 73, 84, 93, 104), dans chaque coupe horizontale à travers le porte-membrane (41, 77, 96, 111, 115, 120, 126, 132, 138), l'au moins un espace de circulation (53, 82, 127, 134, 141) étant adjacent aussi bien à l'enveloppe (40, 76, 109, 116, 121, 124, 130, 136) qu'également au porte-membrane (41, 77, 96, 111, 115, 120, 126, 132, 138) et entourant le porte-membrane (41, 77, 96, 111, 115, 120, 126, 132, 138) sous la forme d'une fente annulaire, qui n'est interrompue que par l'au moins un point d'ancrage (42, 78, 125, 131, 137), une hauteur (112, 117, 122) de l'espace de circulation (53, 82, 127, 134, 141) à travers une zone d'intersection d'une hauteur (12, 61) du porte-membrane (41, 77, 96, 111, 115, 120, 126, 132, 138) et d'une hauteur de l'enveloppe (40, 76, 109, 116, 121, 124, 130, 136) étant définie et le porte-membrane (41, 77, 96, 111, 115, 120, 126, 132, 138) fermant totalement l'élément bas (39, 72, 85, 100, 102, 107, 113, 118, 123, 129, 135), à l'exception d'au moins un espace de circulation (53, 82, 127, 134, 141) pour la circulation du liquide (37) du bas vers le haut
h. suite à l'entrée de gaz (46, 108, 114, 119) à travers l'au moins un espace de circulation (53, 82, 127, 134, 141), l'élément bas (39, 72, 85, 100, 102, 107, 113, 118, 123, 129, 135) pouvant être traversé jusqu'à la sortie (17, 54), **caractérisé en ce que**
i. l'au moins un espace de circulation (53, 82, 127, 134, 141) comporte des courbures (55, 128, 142) saillant à l'intérieur du porte-membrane (41, 77, 96, 111, 115, 120, 126, 132, 138).

2. Filtre à membrane (36 ,71, 83, 92, 101) selon la revendication précédente, **caractérisé en ce que** le porte-membrane (41, 77, 96, 111, 115, 120, 126, 132, 138) comporte des doigts (57, 139) qui sont formés par les courbures (55, 128, 142) et qui sont reliés par l'intermédiaire d'ancres (56, 140) des porte-membranes (41, 77, 96, 111, 115, 120, 126, 132, 138).

3. Filtre à membrane (36 ,71, 83, 92, 101) selon l'une quelconque des revendications précédentes, **caractérisé en ce que** le porte-membrane (41, 77, 96, 111, 115, 120, 126, 132, 138) est relié avec l'enveloppe (40, 76, 109, 116, 121, 124, 130, 136) par l'intermédiaire d'un maximum de deux points d'ancrage (42, 78, 125, 131, 137) qui se trouvent dans le prolongement de l'ancre (56, 140).

4. Filtre à membrane (36, 71, 83, 92, 101) selon l'une quelconque des revendications précédentes, **caractérisé en ce que** dans chacune des coupes horizontales au-dessus de l'au moins un point d'ancrage (56, 140), le porte-membrane (41, 77, 96, 111, 115, 120, 126, 132, 138) est totalement séparé de l'enveloppe (40, 76, 109, 116, 121, 124, 130, 136).

5. Filtre à membrane (36, 71, 83, 92, 101) selon l'une quelconque des revendications précédentes, **caractérisé en ce que** dans au moins l'une des coupes horizontales, l'au moins un espace de circulation (53, 82, 127, 134, 141) forme au moins un canal d'écoulement (58) qui présente une largeur homogène sur plus de 80 % de sa longueur.

6. Filtre à membrane (36, 71, 83, 92, 101) selon l'une quelconque des revendications précédentes, **caractérisé en ce que** dans les coupes horizontales, le porte-membrane (41, 77, 96, 111, 115, 120, 126, 132, 138) présente une section transversale se rétrécissant vers le bas.

7. Filtre à membrane (36 ,71, 83, 92, 101) selon l'une quelconque des revendications précédemment citées, **caractérisé en ce que** l'élément bas (39, 72, 85, 100, 102, 107, 113, 118, 123, 129, 135) comporte l'entrée de gaz (46, 108, 114, 119) pour faire entrer le gaz (38) dans l'élément bas (39, 72, 85, 100, 102, 107, 113, 118, 123, 129, 135).

8. Procédé destiné à filtrer un liquide (37) dans un filtre à membrane (36, 71, 83, 92, 101), le filtre à membrane (36 ,71, 83, 92, 101) comportant un élément bas (39, 72, 85, 100, 102, 107, 113, 118, 123, 129, 135), un tube (45, 73, 84, 93, 104) fermé sur sa périphérie et une entrée de gaz (46, 108, 114, 119), l'élément bas (39, 72, 85, 100, 102, 107, 113, 118, 123, 129, 135) comportant une enveloppe de forme tubulaire (40, 76, 109, 116, 121, 124, 130, 136) et exactement un porte-membrane (41, 77, 96, 111, 115, 120, 126, 132, 138) se trouvant dans cette dernière, relié avec l'enveloppe (40, 76, 109, 116, 121, 124, 130, 136) par l'intermédiaire d'au moins un point d'ancrage (42, 78, 125, 131, 137), dans lequel des membranes à fibres creuses (43, 74, 89, 98) sont fixées dans le haut, le tube (45, 73, 84, 93, 104) se raccordant en haut sur l'enveloppe (40, 76, 109, 116, 121, 124, 130, 136), entre l'enveloppe (40, 76, 109, 116, 121, 124, 130, 136) et le porte-membrane (41, 77, 96, 111, 115, 120, 126, 132, 138), l'élément bas (39, 72, 85, 100, 102, 107, 113, 118, 123, 129, 135) comportant au moins un espace de circulation (53, 82, 127, 134, 141) qui comporte dans le haut une sortie (54) pour l'élément bas (39, 72, 85, 100, 102, 107, 113, 118, 123, 129, 135) dans le tube (45, 73, 84, 93, 104), dans chaque coupe horizontale à travers le porte-membrane (41, 77, 96, 111, 115, 120, 126, 132, 138), l'au moins un espace de circulation (53, 82, 127, 134, 141) étant adjacent aussi bien à l'enveloppe (40, 76, 109, 116, 121, 124, 130, 136) qu'également au porte-membrane (41, 77, 96, 111, 115, 120, 126, 132, 138) et entourant le porte-membrane (41, 77, 96, 111, 115, 120, 126, 132, 138) sous la forme d'une fente annulaire, qui n'est interrompue que par l'au moins un point d'ancrage (42, 78, 125, 131, 137), une hauteur (112, 117, 122) de l'espace de circulation (53, 82, 127, 134, 141) à travers une zone d'intersection d'une hauteur (12, 61) du porte-membrane (41, 77, 96, 111, 115, 120, 126, 132, 138) et d'une hauteur de l'enveloppe (40, 76, 109, 116, 121, 124, 130, 136) étant définie et le porte-membrane (41, 77, 96, 111, 115, 120, 126, 132, 138) fermant totalement l'élément bas (39, 72, 85, 100, 102, 107, 113, 118, 123, 129, 135), à l'exception d'au moins un espace de circulation (53, 82, 127, 134, 141) pour la circulation du liquide (37) du bas vers le haut et
a. le liquide (37) affluant dans l'élément bas (39, 72, 85, 100, 102, 107, 113, 118, 123, 129, 135), traversant l'au moins un espace de circulation (53, 82, 127, 134, 141) et à cet effet, s'écoulant en enrobant le porte-membrane (41, 77, 96, 111, 115, 120, 126, 132, 138),
b. un gaz (38) affluant à travers l'entrée de gaz (46, 108, 114, 119) dans l'élément bas (39, 72, 85, 100, 102, 107, 113, 118, 123, 129, 135),
c. le liquide (37) ne s'évacuant qu'à travers la sortie (54) dans le haut de l'élément bas (39, 72, 85, 100, 102, 107, 113, 118, 123, 129, 135) et n'affluant dans le tube (45, 73, 84, 93, 104) qu'à travers celle-ci,
d. le gaz (38) s'écoulant en haut de l'élément bas (39, 72, 85, 100, 102, 107, 113, 118, 123, 129, 135), s'introduisant dans le tube (45, 73, 84, 93, 104) et montant dans le tube (45, 73, 84, 93, 104) et générant de ce fait un déplacement ascendant du liquide (37) dans le filtre à membrane (36 ,71, 83, 92, 101),
e. le liquide (37) ascendant et le gaz (38) lavant à l'extérieur la membrane à fibres creuses (43, 74, 89, 98),
f. entre une face extérieure de la membrane à fibres creuses (43, 74, 89, 98) et des lumières de la membrane à fibres creuses (43, 74, 89, 98) s'appliquant une pression différentielle, suite à laquelle un perméat liquide (44) est filtré hors du liquide (37) et s'écoule dans les lumières de la membrane à fibres creuses (43, 74, 89, 98),
g. le perméat liquide (44) étant collecté hors de la lumière et s'écoulant hors du filtre à membrane (36, 71, 83, 92, 101),
h. le gaz (38) affluant à travers l'entrée de gaz (46, 108, 114, 119) dans l'au moins un espace de circulation (53, 82, 127, 134, 141) et par la suite,
i. en commun avec le liquide (37,) le gaz (38) traversant l'élément bas (39, 72, 85, 100, 102, 107, 113, 118, 123, 129, 135) dans l'au moins un espace de circulation (53, 82, 127, 134, 141) entre l'enveloppe (40, 76, 109, 116, 121, 124, 130, 136) et le porte-membrane (41, 77, 96, 111, 115, 120, 126, 132, 138) et à travers la sortie (54), affluant dans la tube (45, 73, 84, 93, 104),
j. l'au moins un espace de circulation (53, 82, 127, 134, 141) comportant des courbures (55, 128, 142) saillant à l'intérieur du porte-membrane (41, 77, 96, 111, 115, 120, 126, 132, 138).

9. Procédé selon la revendication 8, **caractérisé en ce que** le liquide (37) et le gaz (38) s'écoulent en enrobant totalement le porte-membrane (41, 77, 96, 111, 115, 120, 126, 132, 138) dans au moins l'une des coupes horizontales à travers le porte-membrane (41, 77, 96, 111, 115, 120, 126, 132, 138).

10. Procédé selon l'une quelconque des revendications 8 ou 9, **caractérisé en ce que** le filtre à membrane (36, 71, 83, 92, 101) est plongé dans le liquide (37).

11. Procédé selon l'une quelconque des revendications 9 ou 10, **caractérisé en ce que** le liquide (37) est amené à l'élément bas (39, 72, 85, 100, 102, 107, 113, 118, 123, 129, 135) au moyen d'un premier conduit à liquide (105) et au moyen d'un second conduit à liquide (106) est évacué en haut, hors du filtre à membrane (36 ,71, 83, 92, 101).
